# EUROPEAN PATENT SPECIFICATION

(11) **EP 1 391 066 B1**
(45) Date of publication and mention of the grant of the patent: **02.07.2008**
(21) Application number: 02731305.5
(22) Date of filing: 09.04.2002
(51) Int. Cl.: H04N 7/16, H04N 7/173, H04N 5/445, H04H 9/00, H04H 1/00

(54) **UNIVERSAL METHODS AND DEVICE FOR HAND-HELD PROMOTIONAL OPPORTUNITIES**
UNIVERSELLE VERFAHREN UND EINRICHTUNG FÜR TRAGBARE WERBEGELEGENHEITEN
PROCEDES ET DISPOSITIF UNIVERSELS POUR DES POSSIBILITES DE PROMOTION POUR DES APPAREILS PORTATIFS

(30) Priority: 09.04.2001 US 829223; 21.04.2001 US 285161 P
(43) Date of publication of application: 25.02.2004
(73) Proprietor: Koplar Interactive Systems International, LLC, St. Louis, MO 63102-2450 (US)
(72) Inventor: KOPLAR, Edward, J., St. Louis, MO 63124 (US); CIARDULLO, Daniel A., Rolla, MO 65401 (US); WITHERS, James, G., Chesterfield, MO 63017 (US); CHUPP, Christopher, E., Rolla, MO 65401 (US); MALTAGLIATI, Alan, G., St. Louis, MO 63128 (US)
(74) Representative: Serjeants
(86) International application number: PCT/US2002/011118
(87) International publication number: WO 2002/084909

(56) References cited:
- WO-A-01/17262
- US-A- 5 214 792
- US-A- 5 577 266
- US-A- 5 767 896
- US-A- 6 088 730
- US-A- 6 104 334
- US-B1- 6 192 340

## Description

### Background of the Invention

The present invention relates to interactive hand-held devices, and more particularly to methods and apparatuses for receiving and decoding modulated signals for use by hand-held devices, and providing benefits to users of the devices from the reception of the signals.

Users of hand-held devices selectively receive modulated signals for purposes including enjoyment, promotion, transfer of information, data collection, commercial verification, security, education, and transactions or verifications at points of sale, as well as other commercial, personal, entertainment, or amusement purposes collectively referred to herein as "promotional opportunities." Data is sent to hand-held devices by optical or electrical means (as is further described herein below), although the devices are independent of a specific transmission protocol and therefore may alternatively use other known modulation and transmission protocols. Data may be received by the hand-held devices by utilizing a sleeve, cradle, or docking station; through an optical sensor, by use of a PCMCIA or alternate computer port, or by FM, AM, and or other radio frequency means, or other means as may be desired based on the type of transmission means selected. Use of the device may allow users to receive, process, and/or store promotional opportunities.

U.S. Patent 4,807,031 Broughton et al. ("Broughton") titled "Interactive Video Method and Apparatus" relates generally to in-band video broadcasting of commands and other encoded information to interactive devices. The invention described therein relates generally to interactive educational and entertainment systems, and is described in one embodiment in the context of television program control of toys located where there is a television receiver, as within a residence.

To encode control data capable of providing a benefit to a user, Broughton discloses a novel method of luminance or chrominance modulation of a video signal that creates a composite video signal, whereby modulating the video signal creates control data. The novel modulation method alternately raises and lowers the luminance/chrominance of adjacent horizontal scan lines to create a video subcarrier that contains the control data.

Under Broughton, the video signal is not being replaced with other data, nor is the data being added as a separate signal along with the video signal, rather, the video signal itself is modulated to subsequently create the control data. Therefore, the control data is a part of, or contained within, the video signal. The encoding method also includes preview and remove circuitry to ensure suitability or the presence of data encoding and removal of data encoding, respectively.

The control data is transmitted either by television broadcast means, or by pre-recorded video players that are connected to a video display. The control data is then received by the video display where a video field of the video display is modulated by control data. The control data is then detected with either opto-electronic or radio frequency (RF) detection means that discriminate the program material from the control data. The detected control data is further reproduced such that the control data can be used with an interactive device.

A practical example of a device as described above is the commercially-sold hand-held game device for receiving and detecting such control data called the "Wheel of Fortune" interactive television (ITV) Play-Along Game, intended to be used while viewing a television program presentation of the famous television show of the same name. The device, produced under license by the assignee of Broughton, was a palm-sized device that included a photosensor within its case to receive video signals. The device, upon receiving composite video signals, then discriminated the control data from the video program material and caused a liquid crystal display (LCD) on the face panel of the toy to present portions of a word puzzle. Thereby users of the device may play the game along with a contestant, or play in response to a videotaped presentation of the game. The "Wheel of Fortune" ITV game together with its hand-held control device including keyboard was commercially available in 1988.

Improvements on the method of modulation described in Broughton are described in U.S. Patent 6,094,228 to Ciardullo et al. and U.S. Patent 6,229,572 to Ciardullo et al. (referred to collectively hereinafter as "Ciardullo"). Both patents describe improved methods of modulation wherein control data is inserted on the visual portion of a video signal by changing the luminance of paired lines in opposite directions, thus allowing larger amounts of data to be modulated in a signal.

Efforts by others to provide hand-held devices capable of receiving transmission of modulated data from a video display are represented by U.S. Patents 5,594,493; 5,761,601; 5,767,896, 5,907,350, and 5,953,047. Of these, patent 5,907,350 discloses a method for storing data on a so-called smart card, which is contended to receive, decode and store encoded data signals comprising redeemable coupons said to be embedded within television segments and transmitted along with normal television segments. The device of patent 5,907,350 is a hand-held unit that receives luminance signals from the television display in accordance with the principles of Broughton. The received video signals are decoded and stored within the card for future use. The card's LCD readout enables Universal Price Codes (UPC) corresponding to the stored data. A scanner reads the UPC codes at a redemption site, and the stored coupon is then erased from a memory of the card. A microprocessor channels the decoding and storage aspects, and a keypad allows use and input.

The term "smart card" as used in the above patents, connotes a hand-held, portable device, not conceptually different from the above-mentioned "Wheel of Fortune" ITV game device. However, the term does not only apply to those patents.

As a generic term, "smart card" gradually has come to mean a card that looks like a credit card but includes a microchip or microprocessor embedded or incorporated into the card. The smart card may be referred to as a "fingerheld" computer, typically including a data storage media ranging from less than a kilobyte up to a megabyte (if not more), and are said to have originated in France. Ognibene, P.J., "Card Smarts," Technology Decisions (July, 1999). Smart cards may, according to a line of reference, also be called "chip cards."

Prior efforts by the inventors of this patent application include International Patent Application WO 2000 US 2438G published as WO 01/17262 A1 by Koplar et al. Koplar relates to various methods and apparatuses for use with promotion opportunities, such as interactive advertising and gaming. Koplar describes various methods for receiving and providing data to hand-held devices, as well as apparatuses and methods for use with promotional opportunities.

For purposes of the present invention, the term "hand-held device" means an interactive device of portable character, preferably of hand-held type that may be carried in the palm by a user, between fingers of the user, or is otherwise intended to be easily grasped and handled manually by the user.

While the hand-held device of the present invention may be in the form of a smart card, it may also be in the form of other types of hand-held devices such as mobile phones. Recently, mobile phones have become equipped with increased capacity to store and process information, and many phones now offer limited network or Internet access. Industry experts estimate that by 2002, more than 100 million mobile phones will have Internet access in some fashion and that by 2003, more than 1 billion mobile phones will be in use worldwide. Mobile phones, with or without Internet access, become powerful tools when appropriately configured to receive auxiliary data.

The personal digital assistant (PDA) is another form of hand-held device that may provide its users with promotional opportunities under the present invention. The most popular manufacturer of PDAs, Palm Computing, introduced its first PDA called the "Palm Pilot" in 1996. The latest version of the Palm Pilot, Palm VII, was introduced in 1999 and was the first PDA to include wireless Internet access without the need of a peripheral device such as a modem.

PDAs and mobile phones, while capable of providing users with Internet access, as of the time of this invention have limited capabilities and functionality as a result of slow data transfer rates. It is desirable to provide users of these hand-held devices and similar devices such as smart cards with hand-held devices that are compact in size yet rich in content that encourage users to participate in various promotional opportunities without having prolonged delays to receive and process information. Smart cards, mobile phones, PDAs, and similar hand-held devices are all capable of participating with the promotional opportunities described in this patent application and are collectively referred to herein as "hand-held devices" of the present invention.

The term "sponsor" is used herein in its broadest possible sense, and may include without limitation entities that issue hand-held devices and entities that accept them or provide redemption services for users of the devices. Sponsors may also include health care and medical institutions and other service or eleemosynary organizations.

The term "computer" is used herein in its broadest possible sense, and may include without limitation a laptop or personal computer, mobile phone, personal digital assistant, or other computer-like device.

### Summary of the Invention

Among the several objects, features and advantages of the invention may be noted the provision of interactive hand-held devices for carrying out various modes of novel and commercially advantageous signaling, information-transferring, and value-indicating methods. The hand-held devices of the present invention are portable devices such as smart cards, mobile phones, and PDAs, which contain means to receive auxiliary data by various possible transmission protocols. The hand-held devices, to provide some of the promotional opportunities described herein, preferably have means to connect to the Internet, which may be referred to herein interchangeably as "network access", "wireless access", "Internet access" or "wireless Internet". These hand-held devices react from the reception of auxiliary data from sources including radio transmissions, computer systems, video recordings, video transmissions or other sources for reproduction of video, audio and/or other data.

The hand-held devices, preferably utilize the modulation and decoding methods described in Broughton and Ciardullo for transmission of auxiliary data from a source via electrical and/or optical means, but alternatively by other known methods of modulation in the art including through the use of the vertical-blanking interval (VBI), audio subcarrier, electromagnetic subcarrier, and RF detection of video decoding. However, in particular embodiments of the hand-held device, it is preferable to use the radio broadcast data system (RBDS) modulation and decoding method as further described in this application.

All video displays, whether a television set or monitor, television-like, or image-presenting display device capable of displaying an image containing a modulated video signal, may in the present specification be collectively referred to simply as "display devices." The video signals containing the auxiliary data may be transmitted to a display device by means of a broadcast, cable, standard digital video methods, satellite or home video. The hand-held devices may also respond to auxiliary data received from non-video displays, such as may be received directly via radio transmissions or from a decoding box.

Signals are received, detected, and reproduced by the hand-held devices for various promotional opportunities including: enjoyment; promotion; coupon or prize validation; advertising by sponsors; advertising verification and polling; transfer of information; data collection; commercial verification; security and access; education; game playing; transactions, verifications, or redemption by sponsoring entities or related commercial locations at points of sale including the Internet; other commercial and non-commercial purposes.

The following are merely illustrative of some of the advantages and objects which the new system provides: television advertising response determination; interactive advertising and promotions; attraction of viewers' attention; effectively increase consumer awareness and retention of commercial advertising, messages, announcements, promotions, and specific products and services; increased customer differentiation of products and services; stimulation of viewers to watch commercials; increase of store traffic in response to commercial messages; fostering of consumer loyalty; enhancement of viewer involvement in program content, including commercials; enhancement of viewer retention of the content of commercial and other messages; enhancement of the value of commercial messages; increased product/service sales; saving of advertising costs; acceleration of response time of customers following delivery of commercial messages; verification of contests and awards; enhancement of viewer retention of the related website domain names; reduction of barriers related to e-commerce opportunities; additional and sometimes instant rewards and information obtainable via the Internet. The uses and advantages are more fully developed in the following description.

Briefly, herein is described a system which uses various hand-held devices to derive benefits from the reception of auxiliary data. Auxiliary data is encoded by modulation of a signal, such as video, which thereby creates a composite video signal consisting of auxiliary data and continuos video program data. The composite video signal is transmitted to and displayed by a display device so that it may be received and used by a hand-held device.

When the hand-held device is a smart card, the preferred method of receiving auxiliary data from composite video signals is by optically detecting and extracting the auxiliary data directly onto the hand-held device. A user first positions the optical receiver of the hand-held device so that it is capable of receiving video signals from a display device. The hand-held device, when actuated and appropriately positioned, begins receiving video signals. Circuitry on the hand-held discriminates whether auxiliary data is present in the video signals (i.e., where the video signals received are composite video signals). If auxiliary data is present, the hand-held device reproduces the auxiliary data for its use.

The preferred method of receiving auxiliary data from composite video signals when the hand-held device is a mobile phone or PDA is by detecting and electronically extracting the auxiliary data from the video signal by use of a decoder box. The decoder box preferably receives a video signal from its source through the use of RCA jacks. The decoder box then processes the composite video signal to electrically determine whether auxiliary data is present. The auxiliary data, when present, is transmitted from the decoder box to the hand-held device. Transmissions to the hand-held device occur preferably through RF, so that the hand-held device need not be aimed at or physically connected to the decoder box. Although the optical transmission method is preferable for smart cards and the electrical transmission method is preferred for mobile phones and PDAs, both methods as well as other methods known in the art including through the use of vertical-blanking interval (VBI), audio subcarrier, electromagnetic subcarrier, and RF detection of video decoding, all of which are interchangeable and may be used with any of the hand-held devices of the present invention.

When auxiliary data is reproduced by use by the hand-held device, various signals, indications, display readouts, or other interactive events provide the user with a benefit according to content of the auxiliary data. The various interactive events described in Koplar, incorporated by reference herein, are usable interchangeably by and in conjunction with the hand-held devices and methods of use with the present invention. The interchangeability includes selective use of the features of the present invention, along with selective use of any of the various apparatuses and methods of Koplar.

The enclosure of the hand-held devices is typically in the shape and form of smart cards, palm devices, or mobile phones. Additionally, other hand-manipulable devices of a similar size and nature that are capable of receiving and processing auxiliary data as described herein are also within the scope of the present invention and may receive data by electrical or optical methods as may be appropriate or desirable. Such hand-manipulable devices include stuffed animals or toys, snapshot-type cameras, replica sports helmets, scaled racing cars, or replica baseball bats.

Radio Broadcast Data Service (RBDS; known as RDS outside of the United States) was recently authorized by the FCC as a method for sending text to FM radio receivers. Envisioned uses of RBDS include call letter/slogan display info, song titles/lyrics, and traffic and weather info. Car radios, in particular, were to be designed so that text received using RBDS could be displayed on the LCD tuning window of the car radio, alternating with, or taking the place of, the normal frequency readout. The speed of the system (throughput) is fairly slow at between 1200 to 2400 bps. To date, the system is underutilized, with no practical uses having been identified.

Radio salespeople have long struggled to answer a basic objection from advertisers when comparing radio advertising to print; namely, the inability of radio to offer "hard copy" coupons. Advertisers have always viewed couponing as a surefire way to gauge the effectiveness of advertising, since there is a paper trail (the redeemed coupons) from a print advertisement that does not exist with a radio advertisement. Thus, it is desirable to provide a practical means of radio couponing by which "off of the air" promotional opportunities are received directly on the hand-held devices.

The methods of data transmission as described in Broughton and Ciardullo are more complicated when data is being sent to hand-held devices via computer monitors, as opposed to other types of display devices such as televisions. Computers constantly refresh the screen displayed by the monitor. Therefore, modulating the video signal displayed by a monitor in real-time is difficult and often impractical as a result of the constant refreshing of the video card and factors relating to the displaying of video by the computer. The present invention transmits data from the monitor to the hand-held device in a less obtrusive manner.

A method and a related system of the present invention are set forth in the following description and claims. Similarly, other objects and features will be apparent or are pointed out more particular herein below.

### Brief Description of the Drawings

**FIG. 1** is a perspective view schematically illustrating use of any of several embodiments of an interactive hand-held device in accordance with and embodying the present invention.
**FIG. 2** is a perspective external view of an embodiment of an interactive hand-held device in accordance with and embodying the present invention.
**FIG. 3** is a perspective external view of an embodiment of an interactive hand-held device in accordance with and embodying the present invention.
**FIG. 4** is a perspective external view of an embodiment of an interactive hand-held device in accordance with and embodying the present invention.
**FIG. 5** is a perspective view of a decoding box.
**FIG. 6** is a perspective view of internal features of the interactive device of **FIG. 7** of the embodiment of **FIG. 7** showing an interactive hand-held device of the invention.
**FIG. 7** is a perspective external view of another embodiment of an interactive hand-held device of the invention.
**FIG. 8** is a perspective external view of another embodiment of an interactive hand-held device of the invention.
**FIG. 9** is a perspective view of internal features of the interactive device of **FIG. 7** of the embodiment of **FIG. 8** showing an interactive hand-held device of the invention.
**FIG. 10** is a schematic diagram of circuitry that may be used to provide various embodiments having circuit features evident in this diagram.
**FIG. 11** is a schematic diagram of other circuitry that may be used to provide various other embodiments.
**FIG. 12** is a perspective view of a docking station without a hand-held device.
**FIG. 13** is a perspective view of a docking station with a hand-held device.
**FIG. 14** is a perspective view of yet another embodiment of an interactive hand-held device of the invention, and referred to as a "sports" hand-held device.
**FIG. 15** is a front view of yet another embodiment of an interactive hand-held device of the invention, and referred to as a "sports" hand-held device.
**FIG. 16** is a block diagram of other circuitry that may be used to provide various other embodiments.
**FIG. 17** is a block diagram of other circuitry that may be used to provide various other embodiments.
**FIG. 18** is a block diagram of other circuitry that may be used to provide various other embodiments.
**FIG. 19** is a block diagram of the method of radio frequency detection using RBDS by a hand-held device.
**FIG. 20** is a block diagram of the method of encoding information on radio signals using a computer with RBDS encoder.
**FIG. 21** is a another block diagram of the method of radio frequency detection using RBDS by a hand-held device.
**FIG. 22** is a block diagram of the method of optical detection from a display a monitor by a hand-held device.

Corresponding reference characters identify corresponding elements throughout the several views of the drawings.

### Description of Inventive Embodiments

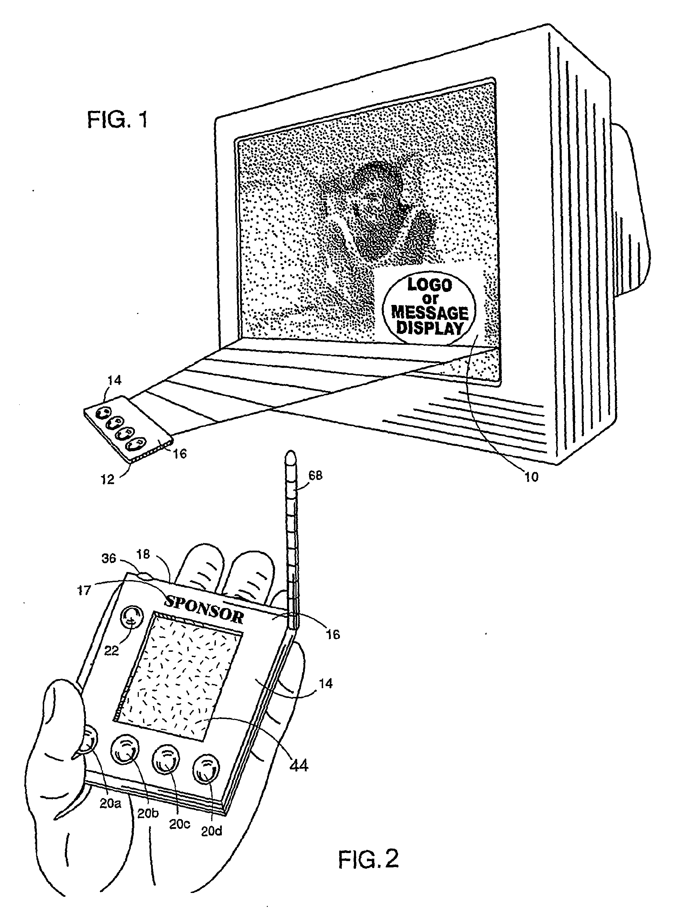

Referring to **FIG. 1**, in a system of the invention, and in accordance with the various methods herein described, composite video signals are received and projected by a display device **10,** to be received by a first embodiment of an interactive hand-held device **12** of the invention. Display device **10** is representative of a television screen, video monitor or other video display, movie screen, computer monitor, video-converted display or video-like display, capable of receiving analog or digital video or video-representative signals from a suitable source, such as a television transmitter, a videotape, a streaming video server, a Digital Versatile Disc ("DVD"), or the computerized display representation of such a source of image content.

Display device **10** may schematically represent a video display for displaying video signals but may also be any sort of electron gun, active, array or passive array display device capable of providing not only imaged information in a visible mode but also auxiliary information (e.g., data) in a substantially transparent mode. Display device **10** may be further characterized as a computer monitor or display, as well as a portion or computer window of display device **10.** Display device **10** may also be a high definition or digital television, or other digital video presentation device. Display device **10** may vary in size, and may be small like a Sony Watchman^{®}, or large like a movie screen or a Sony Jumbotron^{®}. Video signals receivable by display device 10 include those delivered by microwave relay, satellite retransmission or cable, streaming and other types of downloadable or viewable computer video presentations, and those generally made available by wired or wireless methods.

Hand-held device **12** may be in the form of any type of hand manipulable device such as a smart card, cell phone, PDA, or other palm-like device. Enclosure **14** of hand-held device **12** is illustrated in **FIG. 1** as taking the form of a smart card. Hand-held device **12** may be held in the palm or between the fingers of a user in the generally vicinity of display device **10,** typically within the same room and, when necessary, oriented so that front surface **16** faces display device **10,** and thereby hand-held device **12** may optically receive light from a visual representation of the video signal from display device **10.** When hand-held device **12** is a smart card and configured to optically receive auxiliary data, it is suitably oriented so that device **10** may obtain the video signal from display device **10** as shown in **FIG. 1****.**

Hand-held device **12** is depicted in **FIG. 2** as a PDA and shown in a manner in which it may be held and used. Hand-held device **12** may include a PDA-sized housing **14** that encloses various circuits and circuit components of the device. Enclosure **14** may be of any hand-held shape desired that is functional and hand manipulable, examples of which include a PDA (as shown), cell phone, PCMCIA card, snapshot-type camera, replica sports helmet, replica baseball bat or football, or scaled racing car.

On front surface **16** of hand-held device **12,** above LCD **44** is imprinted the brand name of a sponsor **17** and possibly information or indicia that may induce a user to associate device **12** with sponsor **17.** When hand-held devices **12** are inexpensive to manufacture, such as when they are in the form of smart cards, businesses are more likely to participate in distribution of hand-held devices **12** and accordingly sponsor **17** may be included on these devices **12** with higher frequency. However, when hand-held devices **12** are a user's multi-function personal device such as a cell phone or PDA, which has a primary use other than receiving promotional opportunities, such indicia is less likely to be included. Sponsor **17** may be a company providing hand-held device **12** to a user of its service, such as a hotel, phone company, PDA service, or place of business. Sponsor **17** may provide permanent or temporary use of hand-held device **12** for access, privileges, and/or rewards. Sponsors **17** may also include various entities such as advertisers, Internet websites, television shows, as well as for organizations providing or participating with other occurrences, programs or events, for which use of hand-held device **12** will provide means for a user to obtain promotional opportunities.

Hand-held device **12** as illustrated in **FIG. 2** have both RF antennae **68** and lens **36** so that device **12** may receive auxiliary data by both optical and electrical means. When hand-held device **12** contains such reception means, it may be used with multiple promotional opportunities in multiple locations. Thus, with the present invention, a user may receive auxiliary data on hand-held device **12** at a game inside a stadium or arena electrically via RF antennae **68,** and may also receive auxiliary data while watching a game at home optically by positioning leading edge **18** towards display device **10** (as shown in **FIG. 1****).** Users may thus participate in promotional in multiple locations using the same hand-held device **12.**

Button **22** of hand-held device **12** preferably provides the user with means for selecting between receiving auxiliary data via electrical means (such as through RF antenna **68)** or by optical means (such as through photosensor **30).** Preferably, the user, based on location, will select the means by which he/she wishes to receive the auxiliary data thereby saving power and preventing the user from receiving undesirable auxiliary data. However, hand-held device **12** may be configured to monitor the data input means (e.g., RF antenna 68 and photosensor **30)** to determine whether auxiliary data is being transmitted to device **12** by any of the methods described herein.

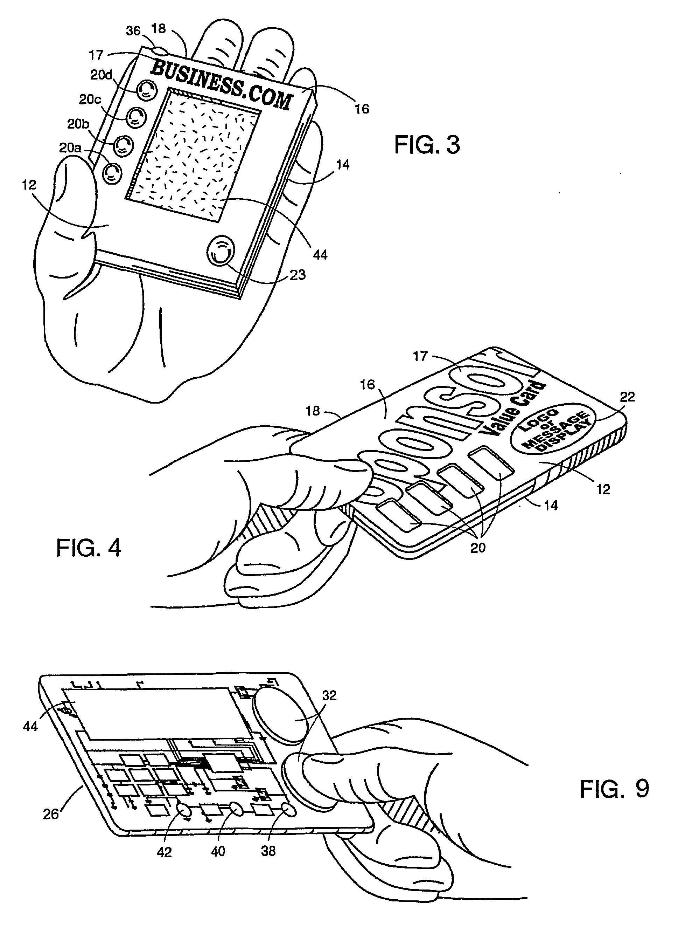

As shown in **FIG. 3****,** a leading edge **18** of hand-held device **12** is outfitted with lens **36** to provide means for receiving auxiliary data on device **12** via optical means. Visible from front surface **16** of hand-held device **12** is LCD **44** and four light-admitting diodes or other electro luminescent light sources **20a, 20b, 20c,** and **20d.** Depending on its desired promotional use, hand-held device **12** may include LCD **44** and lights **20a, 20b, 20c,** and **20d,** one of the foregoing, or neither. Hand-held device **12** may have various users controls as described in Koplar, which may include a keypad (not shown) to allow user input for specific functions and additional uses.

Hand-held device **12** is depicted as a smart card in **FIG. 4** in a manner in which it may be held and used. A leading edge **18** of hand-held device **12** may include a lens **36** or small aperture **37** to admit video signals to a photosensor **30** within enclosure **14,** as is described herein. Visible from front surface **16** of hand-held device **12** are a plurality of light-emitting devices **20** which may be light-admitting diodes (LEDs) or other electro luminescent light sources, including, for example, regions of a LCD of either active or passive type.

A typical manner in which hand-held device **12** is used to optically receive auxiliary data is as follows: A user of hand-held device **12** watches a television presentation such as a commercial, television program, movie, or other video-displayed program. When such a presentation is displayed, the user then holds hand-held device **12** as shown in **FIG. 3** or **4****,** depending on the form of device **12** used. The user then positions hand-held device **12** so that leading edge **18** of device **12** will be positioned for receiving video signals from display device **10.** Hand-held device **12** or display device **10** may have indicia informing the viewer to press detection button **23** at a preferred time, such as when a commercial of a sponsoring entity appears. Although the term "button" is used herein, it is considered to include membrane switches, pressure or touch regions capable of activation and carrying out the function of any of the various buttons described herein. When the user presses detection button **23,** the video signal will be detected and received by photosensor **30** (the process to be described below) within enclosure **14.** The composite video signal comprises a video signal modulated with auxiliary data, in accordance with the teaching of the above-referenced Broughton and/or Ciardullo. A discriminator, implemented by circuitry of hand-held device **12** determines whether auxiliary data has been transmitted along with the video signal of the presentation.

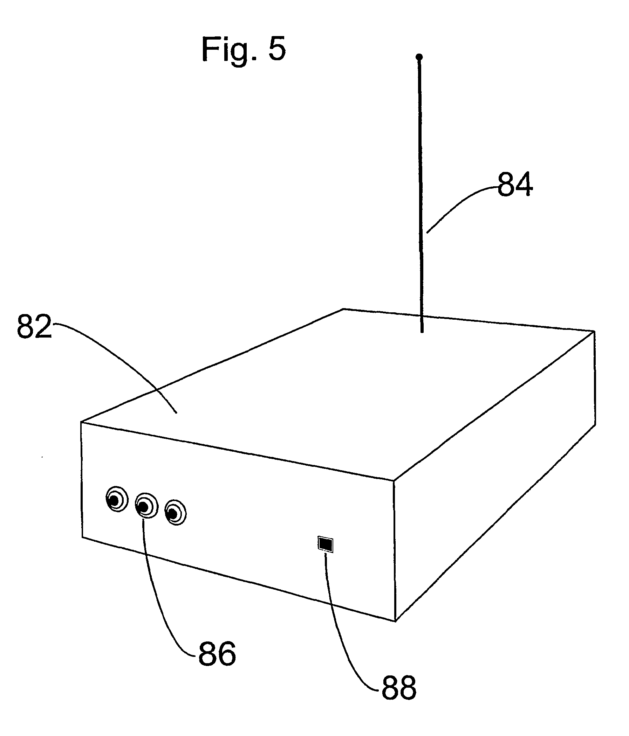

A typical manner in which hand-held device **12** is used to electrically receive auxiliary data is as follows: video signals are sent via RCA cables from a signal source (not shown) such as a VCR and received by a decoder box **82** as shown in **FIG. 5****.** Decoder box **82** discriminates the auxiliary data and transfers it to hand-held device **12** by RF or by other means, such as IR, a computer port, or direct wire connection. Decoder box **82** may otherwise receive the data through other methods such as through use of a super VHS, fire wire, or coaxial jack, or may be connected to an RF antennae, integrated into the circuitry of display device **10,** or otherwise connected to a signal source so that decoder box **82** receives the video signals. As may be observed in **FIG. 5****,** decoder box **82** contains antenna **84** so that it may transmit RF signals between it and hand-held device **12,** RCA jacks **86** so that it may receive data from a signal source, and a network interface jack **88** so that it may be connected with a computer network or directly to a computer (not shown).

Decoder box **82** may also function as a two-way device, so that it may receive feedback from hand-held device **12.** Decoder box **82** may, with a graphics-rendering unit such as a Scorpion processor (not shown), display information received from hand-held device **12** on display device **10.** Decoder box **82** may contain network access via a suitable network connection to network interface jack **88,** which may supplement or replace the need for network access on hand-held device **12.** Decoder box **82** may also contain means to control peripheral devices, such as a VCR. Users, upon receipt of information such as a television schedule on their hand-held device **12,** may transmit a request to decoder box **82** or VCR (not shown) to schedule the recording of a television program.

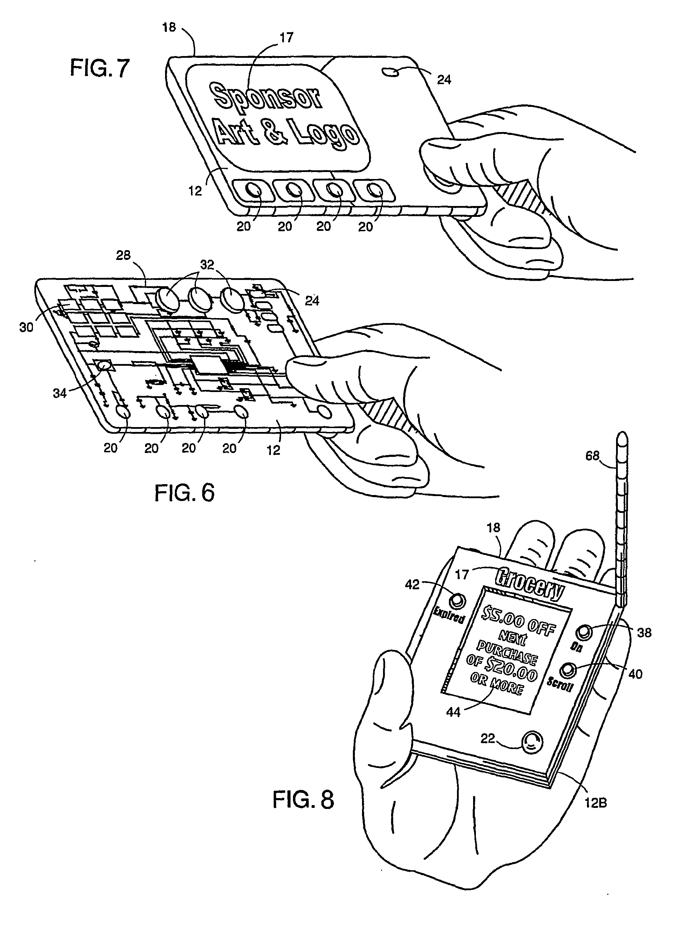

Turing to **FIG. 6****,** when the discriminator of hand-held device **12** determines that the video signals received from display device **10** contain auxiliary data, or auxiliary data is received via other means, the circuitry of device **12** may then causes audio transducer **34** present on printed circuit board **26** to sound a tone or "beep", providing assurance that the auxiliary data has been received satisfactorily. A suitable aperture **37** may be provided on the front or rear surface of enclosure **14** to allow sound to pass from audio transducer **34** to the user of hand-held device **12.**

Hand-held device **12** may contain more advanced means of providing sound to its user. Hand-held device **12** may contain advanced sound circuitry (not shown) to enable device **12** to play digital audio, including popular audio formats MP3 and MIDI, herein "advanced sounds." The sound is preferably preset on the hand-held device **12.** However, sound may also be downloaded to or prerecorded on hand-held device **12** and configured such that when an event occurs for which a sound is desired, the event triggers the circuitry of device **12,** which causes sound to be transmitted through audio transducer **34** or other hardware (not shown) designed to allow the user of device **12** to listen to the sound. Hand-held device **12** may also be configured to play sounds upon user demand, such as when user actuates button **22** and/or reception button **23.**

Hand-held device **12** may also be configured to initially prohibit user from taking advantage of prerecorded, preset sounds or promotional opportunities so that sounds or promotional opportunities are unavailable to the user of device **12.** The hand-held device **12,** upon receiving specific auxiliary data that directs device **12** to unlock the sounds and promotional opportunities makes them available to the user. The sounds and promotional opportunities may then be available to the user for a limited time or indefinitely.

An additional feature of the present invention is that circuitry of hand-held devices **12** may coordinate transmitting and reproduction sound between the device **12** and other devices **12** and other peripheral devices (not shown). This circuitry is herein termed " sound coordination circuitry." Once the sounds are available for use on hand-held device **12,** users of device **12** may perform the sounds as per the desired promotional event. Through use of computer interface **70** as described in Koplar, or other communication means such as IR or RF, a hand-held device **12** may synchronize songs with other devices **12** and other peripheral devices by transferring and receiving information and triggers from the various devices **12.**

The circuitry may also cause operation of one or more of lights **20** to indicate a value that has been received. By outfitting hand-held device **12** with lights **20,** device **12** is capable of providing promotional opportunities.

**FIG. 7** illustrates features of hand-held device **12,** including the provision of aiming light **24** on front surface **16** of device **12.** Aiming light **24** is typically included on embodiments of hand-held device **12** where video signals are optically received by device **12,** such as to indicate that device **12** is positioned such that it is capable of capturing video signals emanating from a display device **10.** When button **22** is pressed while the leading edge **18** of hand-held device **12** is generally oriented toward display device **10,** received composite video signals on device **12** cause illumination of aiming light **24** to indicate that video signals are being received. Aiming light **24** illuminates for so long as data is being received, for a predetermined period of time sufficient to indicate that hand-held device **12** is oriented or aimed correctly, or for a long enough time period as to enable the encoded signals to be received by device **12.** Aiming light **24** may be included on embodiments of hand-held device **12** where the video signals are electrically received to alert the user that auxiliary data is being received, such as through IR, RF, or through computer interface **70.**

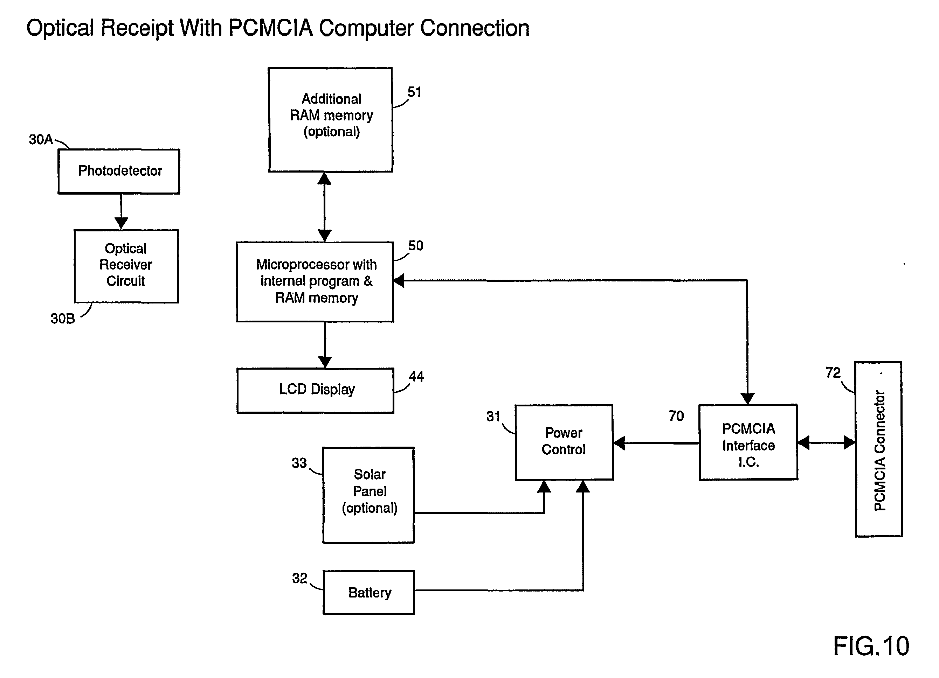

Referring back to **FIG. 6****,** the internal features of hand-held device **12** are illustrated. The features may be seen to include a printed circuit board **26** having integrated circuits **28** including button **22** and aiming light **24.** Circuit board **26** is shown to include photosensor **30.** Photosensor **30** is oriented so that it may receive light through a suitable aperture **37** (not shown) along leading edge **18** of hand-held device **12,** which aperture **37** may be at locations as shown in **FIG. 2** and **FIG. 3****.** Circuit board **26** is powered by one or more batteries **32** or other suitable cells (not shown), intended to provide sufficient power for operation of hand-held device **12** for days, weeks, months, or years. Batteries **32** may be used with other similar sources of portable power, such as solar cells **33** (as shown in **FIG. 10****).** It will be appreciated in the art that the electronics of a PDA, cell phone, or other computer-like device capable of processing auxiliary data as described herein may contain a significant amount of additional circuitry (not shown) to provide functionality unrelated to the present invention.

Three lights **20** are shown present on circuit board **26,** and they may take the form of LEDs. However, as will be understood from study of **FIG. 6****,** circuit board 2**6** may include the capability for more than three such lights. For example, it may include circuitry for energizing up to nine LEDs.

Referring now to **FIG. 8****,** an embodiment of hand-held device **12** is shown to include LCD **44.** LCD **44** is capable of presenting the graphic content in monochrome, however color is preferably used. However, LCD **44** may also be a textual display consisting of 16 digits, but less or more display capability may be provided based on usage and need.

Hand-held device **12** has power button **38** that when depressed will initiate operation of LCD **44** to display a coupon, a prize notification, or other information indicating receipt by device **12** of auxiliary data. For example, LCD **44** may used to display a first coupon in a circularly linked list of offers. Power button **38** may also held to initiate receiving video signals, or may be used for other display or control purposes separately from button **22.** Scroll button **40** allows a user to traverse, i.e. scroll, information retained or received by hand-held device **12,** for example, the circularly linked list of offers received and stored on device **12.** It will be appreciated in the art that any of the various buttons **22, 23** (not shown), **38, 40,** or **42** may be implemented by using other "pre-existing" buttons (i.e., with other functionality) on hand-held device **12,** such as the numbered buttons on a cell phone or shortcut buttons on the PDA. It will furthermore be appreciated that these buttons **22, 23, 38, 40,** or **42** may be implemented via touch screen, such that physical buttons **22, 23, 38, 40,** or **42** may be implemented "virtually" on hand-held device **12.** Expiration button **42** acts in the manners disclosed in Koplar. Offers received by hand-held device **12** may be indicated not just by illuminating lights **20,** but by textual information and graphics displayed on LCD **44** as may be observed in **FIG. 8****.**

**FIG. 9** shows circuit features of the card embodiment of hand-held device **12** without enclosure **14.** LCD **44** is evident, as are controls **38, 40** and **42,** and a pair of batteries **32** located on the right side of circuit board **26.**

**FIG. 10** shows a chart of an alternate embodiment of hand-held device **12** having an input-output means preferably in the form of a Personal Computer Memory Card International Association ("PCMCIA") interface **70,** such as may commonly be found on a laptop computer. PCMCIA interface **70** of hand-held device **12** connects with PCMCIA connector **72** of a computer or computer-like device to transmit information back and forth. Connections with PCMCIA interface **70** to a computer are preferably made by a PCMCIA port, but the connection means may also be other known computer and computer-like slots, connections, and ports such as Ethernet, Token Ring, infrared ("IR"), RF, Small Computer System Interface ("SCSI"), Universal Serial Bus ("USB"), parallel port ("Parallel"), serial port ("Serial"), IEEE 1394 FireWire ("FireWire"), S/PDIF, AES/EBU, fiber optical cable, and Apple Desktop Bus ("ADB"). Hand-held device **12** may also utilize portable data storage (not shown), such as flash memory, mini-disc, or stick memory, to hand-transfer information from hand-held device **12** to a computer. The types of connections used in various applications of hand-held device **12** may vary based on factors including cost, transfer speed, acceptance by industry, and user preference. Implementations of hand-held device **12** incorporating PCMCIA interface **70** and its methods of use are disclosed in Koplar and may be interchangeably used with the present invention.

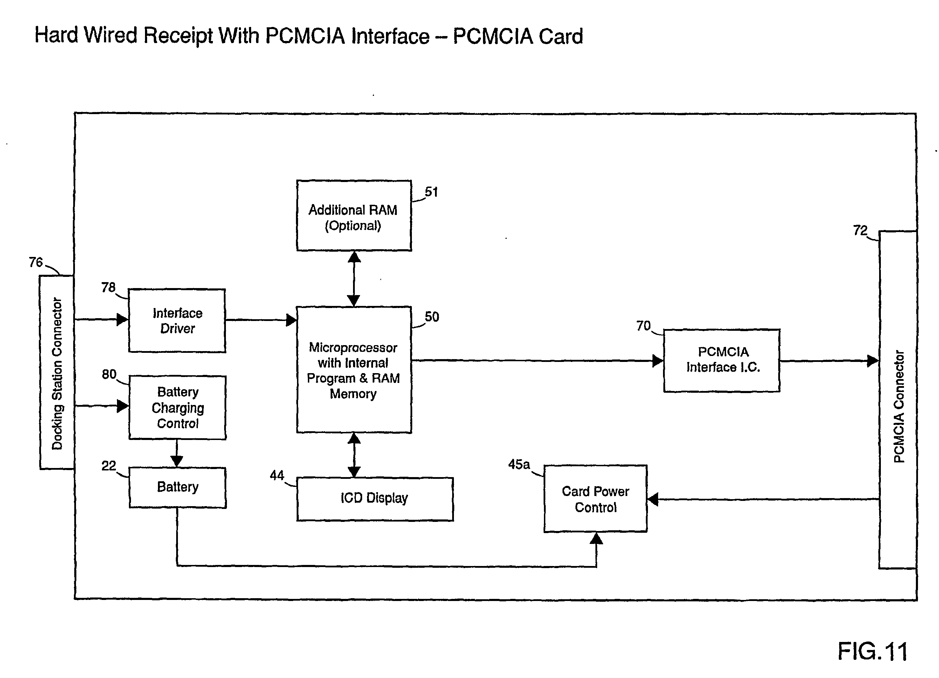

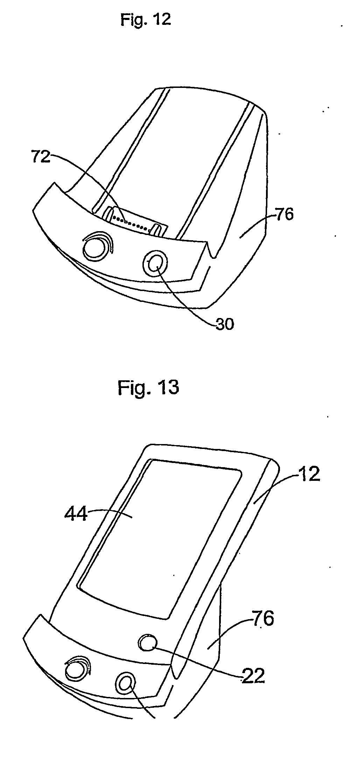

**FIG. 11** is another embodiment of hand-held device **12** with an input-output interface in the form of PCMCIA interface **70** and docking station **76** as shown. Docking station **76** may receive discriminated auxiliary data or composite video signals, and transfer either to hand-held device **12** by PCMCIA interface **70.** Alternatively, as shown in **FIG. 12****,** docking station **76** may contain photosensor **30** so that it may be used to optically detect the video signal from display device **10.** Then either the entire video signal may be transferred to hand-held device **12** so that device **12** can discriminate the auxiliary data, or the docking station **76** itself can discriminate the auxiliary data and transmit the auxiliary data to device **12.** The data may then be transmitted from docking station **76** to hand-held device **12** by IR, RF, or by PCMCIA interface **70.** **FIG. 13** illustrates a manner in which hand-held device **12** may receive auxiliary data from docking station **76.**

Referring back to **FIG. 11****,** docking station **76** may charge battery **22** of hand-held device **12** by its battery charging control **80.** Docking station **76** may implement various hand-held device **12** functions by controlling microprocessor **50** through interface drive **78.**

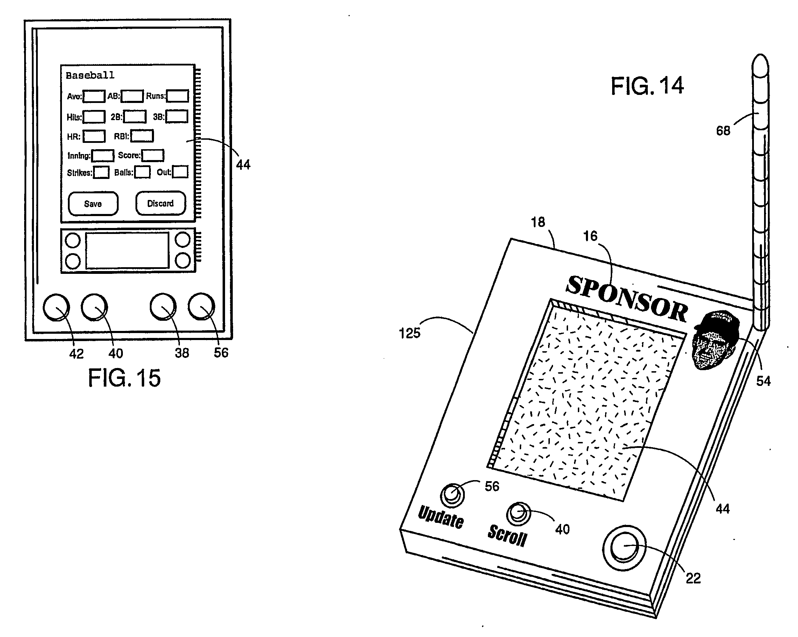

Turning to **FIG. 14****,** a version of hand-held device **12** that may be termed a "sports" device is shown. It includes enclosure **14,** which is provided with front surface **16** which may include a visual field **54** for bearing the image of a sports contestant. In addition, LCD **44** is provided together with button **22** which allows a user to initiate operation of hand-held device **12,** preferably with an RF antenna **68** oriented for receiving RF signals, or alternatively for optically receiving composite video signals through photosensor **30** (as shown in **FIG. 2****),** such as by holding hand-held device **12** so that leading edge **18** is generally towards display device **10** presenting a program relating to the sports celebrity or other person depicted on display device **10.** This "sports" hand-held device **12** may be outfitted, configured, and used in the manners described in Koplar and herein.

For example, as a celebrity batter takes his turn during a baseball game, television viewers direct their "sports" hand-held device **12** at display device **10** to receive composite video signals, or preferably configure their device so that they may electrically receive the auxiliary data from a signal source. In both instances, the viewers receive real-time statistics about their favorite athlete during the telecast via hand-held device **12.** Accordingly, the users of hand-held device **12** at a live sporting event may receive auxiliary information without the use of display device **10,** such as by RF or IR. Sports fans may thus obtain live statistics and trivia through use of hand-held device **12** while they watch the game live at the event and at home. Fans with obstructed views or sports fanatics may obtain additional information by use of hand-held device **12** while enjoying the live sporting event. The information received by hand-held device **12** may take many forms including, as noted, statistics such as batting average, home runs, or other personalized information about the player that is stored in device **12** for future reference or updating. An example of the presentation of such information on hand-held device **12** is shown in **FIG. 15****.** The stored information is then conveniently displayed on LCD **44** for the device owner by the push of scroll button **40** or update button **56,** or otherwise transferred through a PCMCIA interface **70** (not shown) to a computer.

Use of "sports" hand-held device **12** in connection with a baseball game is merely illustrative. Other sports in which players have statistics that change during play, over a year, or which may include information unique to the player, such as hometown or previous teams, may similarly be downloaded to and conveyed by hand-held device **12.** In a similar manner, hand-held device **12** may also be used in connection with concerts and other special presentations. Users may acquire useful information about the concert or special presentation, such as the names of performers, set lists, the venue location and history, and related Internet addresses through receipt of auxiliary data on hand-held device **12.** Persons with hearing impairments may receive real-time text of live speeches on hand-held device **12.** Hand-held device **12** may also be used to receive information relating to monuments, buildings, cars, animals, etc. during the course of a live or video presentation, wherein the transmission to device **12** contains auxiliary data.

Hand-held device **12** may also be used in trivia applications as follows: The user watches a trivia game show, such as the popular television show "Who Wants to be a Millionaire?" The user may play along by utilizing hand-held device **12.** The question is downloaded and received by hand-held device **12,** either during the broadcast or prior to the broadcast, by use of auxiliary data and the methods described herein. The questions are synched to display device **10,** such that when display device 10 first presents the questions, the auxiliary data is sent to hand-held device **12** and triggers it to display the question and possible answers to the user. The user chooses the correct answer, or places the answer in order in a timely manner, or must otherwise comply with the rules of trivia game request in a similar manner to that of the contestants. The user receives points or credit for the correct or timely answer, based on various factors that may include the number of other at home users who answer correctly or speed of answer. The percentage of at home viewers either nationwide, local, or by other area may be displayed in real or delayed time either on display device **10,** Internet website or hand-held device **12.** Users may achieve regional or national rakings based on their performance. The final results from the various games may then be stored at a central database. Users who achieve a high score may receive recognition, a prize, or an option to play in a future televised game.

Hand-held device **12** may also be used with other trivia applications as follows: A user takes hand-held device **12** and appropriately configures it to receive modulated video from display device 10. During an event, such as the "Grammys", performers appear on the screen and perform a song. The user is then notified that a promotional opportunity is available, either through display device **10** or hand-held device **12.** This preferably occurs as modulated video triggers a graphic rendering unit in decoder box **82,** creating an icon to appear on display device **10.** (Thereby not appearing on display device **10** of people who do not have such a unit.) Hand-held device **12** provides the user with an opportunity to purchase a song or album on which the performers appear. The money for the purchase may be made through online automation or a third-party Internet website, or may be entered or taken from a website. Alternatively, if the user so desires, an order requiring final approval and payment information may be sent to the user's e-mail address. The user may then purchase the music in the following manners: directly, through a third party's website such as the affiliate program at "CDNow", or directly from the manufacturer. Otherwise, a link for the special purchase can be sent to the user's preferred e-mail address. Bonus or additional rewards may be sent along with the purchased product such as a bonus disc with previously unreleased material, live songs or videos, or future product discount. The user may choose to have the song sent in appropriate digital format to their e-mail account, or the selected song may become available for a period of time at a website for the user to download. Finally, the song may become part of a list that, when full to the length of a CD, the CD is automatically created and sent to the user. It will be appreciated in the art that this method of purchasing may be used with any other similarly sold products (such as jewelry on the "QVC network").

Other examples for use of this technology include participatory game shows produced for television distribution, whether produced and distributed for broadcast, cable, direct satellite, or close circuit transmission; whether distributed by means of home video or DVD may be encoded with auxiliary data enabling viewers of programming material to decode either optically or electronically; process, store and display the data on hand-held device **12** for the purpose of winning prizes or accumulating points. Participatory type games include: (1) games revolving around trivia questions dealing with subjects such as sports, music, news, movies; (2) games revolving around Multiple choice questions; (3) games dealing with true or false/ yes or no type questions; (4) games dealing with guessing letters; and (5) games dealing with question revolving around Who? What ? Where? When? How? or Why?

The viewer of display device **10** participates remotely either at home, at a pubic establishment such as a restaurant or bar, or in a hotel room, all by means of hand held device **12.** As the answers are decoded, processed and stored in hand-held device **12,** the viewer then chooses a response to the questions by depressing from a choice of buttons the correct answers. In case of hand-held devices **12** with LCD display **44** such as the PDA's, cell telephone, or wireless handset, the choice of answers may be displayed on LCD **44.** By touching the choice with a stylus, pointer or finger, the answers are pre-defined by the televised show in determining the correct answers. Accumulation of winning answers are tallied within hand-held device 12 and displayed to the user in a numeric tally format. Answers may also alternatively be presented to a user in the form of an alphabetical display.

Point accumulation or winning combinations are then redeemable for various levels of prizes, and are redeemable by a program's sponsor at point of sale, through the computer or computer interface means **70,** or by the program's fulfillment process.

Thus, in the case of a national televised trivia contest, participants participate at various sports bars where they are issued a "play-along" hand-held device **12.** During the televised game, participants in the various sports bars across the country compete by guessing the correct answers and tallying points not only against each other, but also the studio contestants on the shows. The winning holder of hand-held device **12** may be awarded a cash prize or other consideration including a possible appearance on the television show. The redemption may occur through hot syncing the hand-held device **12** to the program's web site, to a sponsor's retail site, or by other means of fulfillment.

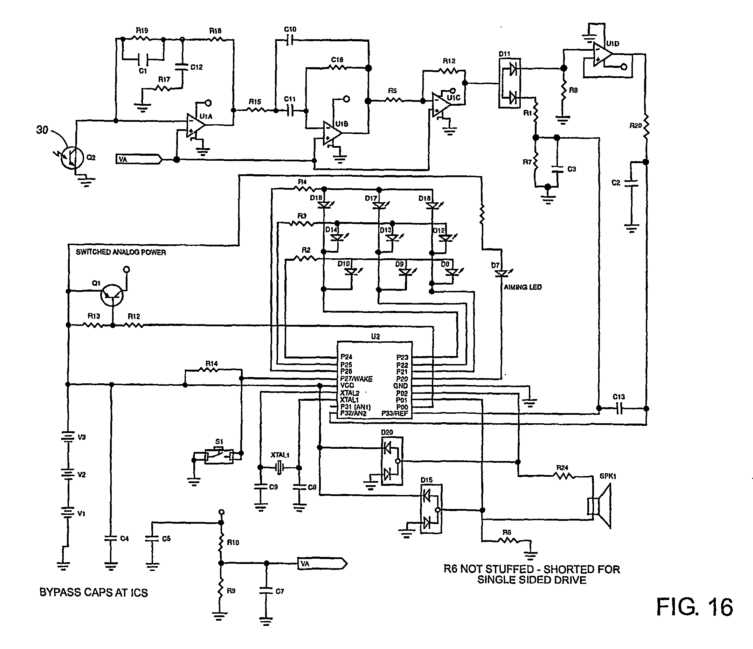

In **FIG. 16****,** a schematic circuit diagram of one form of circuitry that may be used to provide the features and functions of the several embodiments described herein, elements are identified by their conventional numerology conventional characters proximate of the elements. Optional photosensor **30** is seen to be constituted by a photodiode or phototransistor **Q2** which provides the signal to amplification and filter circuit consisting of an operational amplifier **U1A** including a circuit consisting of the components of **C1, R19, R18** and **C12** interconnected between the output and the inverting input of operational amplifier **U1A,** and so providing an amplifier and filter. Thus amplifier and filter signal is provided through **R15** to a filter and frequency shaping circuit comprising of an operation amplifier **U1B** having in its feedback circuit the components **C10, C11** and **R16.** These circuits provide a filtered, frequency-shaped output through a resistor **R5** through a circuit consisting of operational amplifier **U1C** and resistor **R11.** Operational amplifier **U1C** has an output coupled to a diode pair **D11** which thus provides a pair of outputs, the upper to a circuit comprising an operational amplifier **U1D,** providing in effect a buffer whose output is a data signal delivered through a resistor **R20**, and the lower of the diodes **D11** providing a signal through a resistor **R1** to a further resistor **R7**, across which is a capacitor **C3**. The node between resistors **R1** and **R7** provides 16 kHz signal that is of the horizontal line scan rate or frequency television display optical signals received by photosensor **30 (Q2).** The horizontal scan frequency of conventional NTSC color signals is, more precisely, 15.625 kHz. (approximately 16 kHz, as here described). Similarly, the discriminator circuitry provides at the output of operational amplifier **U1D** an 8 kHz signal representative of the auxiliary data received, as produced by alternate-line luminance modulation of the display. The discriminator circuit thus described provides both the 16 kHz and 8 kHz (more precisely, 7.8175 kHz), which constitutes the actual data, and determines whether the 8 kHz data carrying the information (data) content of the received auxiliary data is present by determining whether average signal magnitude of the 16 kHz or 8 kHz signals is greater, so that if auxiliary data is present, i.e., there is 8 kHz modulation energy in the received light signals, they are provided to a microprocessor **U2** of the circuit for decoding the information content within the 8 kHz signal. Thus, the received composite video signal is amplified and filtered to de-emphasize the 16 kHz signal and retrieve the 8 kHz signal carrying the data. I.e., wave shaping and frequency shaping filter circuits provided by operational amplifiers **U1A** and **U1B** de-emphasize the horizontal retrace frequency and amplify the half-frame rate carrying the data content of interest. The circuits filter the frame rate signal and use it as a reference to compare its relative signal magnitude against the 8 kHz data-carrying signal. If the retrieved 8 kHz signal is of greater magnitude than the conditioned 16 kHz signal, auxiliary data is present and may be utilized by the processor. Microprocessor **U2** is preferably of commercially available type Z86E02, and operates according to machine instructions stored in its resident ROM memory. Although not separately shown, microprocessor **U8** includes random-access memory (RAM or DRAM) in which decoded data is stored. Thus, microprocessor **U2** is to decode and store, or store indication of, the data present in the 8 kHz signal, as by illuminating one of more of the LEDs and causing them to remain on as evidence or indication of the data, substantially in accordance with the teachings of Broughton or Ciardullo, and to drive displays of the device and/or its LEDs or other signal devices, as well as to provide any audio function, as well as also to energize an aiming LED D7 when auxiliary data is present. So also, if desired, a signal may be driven by **U1** in response to the presence of the auxiliary data, thus providing an aiming light function indicating, in simple effect, that the hand-held device is receiving composite video signals or auxiliary data.

For providing illumination of lights **20** or **20a-20d** described above in connection with the various embodiments, shown here are nine LEDs **D8-D18.** It will be understood that not all of these LEDs need be used for a specific embodiment of hand-held device **12.** That is, the circuit may be configured so as to drive one, two or three or more of the LEDs as according to the desired function and use of hand-held device **12.**

Shown adjacent microprocessor **U2** are two diodes **D15** and D20 that are used to bypass any noise generated from the microprocessor. The speaker **SPK1** is element **34** shown in **FIG. 6****.** A clock crystal **XTAL1** provides 8 MHz clock signal to microprocessor **U2.** Capacitors **C8** and **C9** are part of the clock circuit.

Immediately adjacent the clock circuit is a switch **S1** to provide the function of button **22** in the several embodiments for initiating operation of the device. Switch **S1** is tied to a power supply circuit comprising power cells **V2** and **V3** (each of 1.5v potential), and a resistor **14,** and including a switched analog power circuit comprising a transistor **Q1** and resistors **12** and **13** which enable power to be provided to the array of LEDs **D8-D18.**

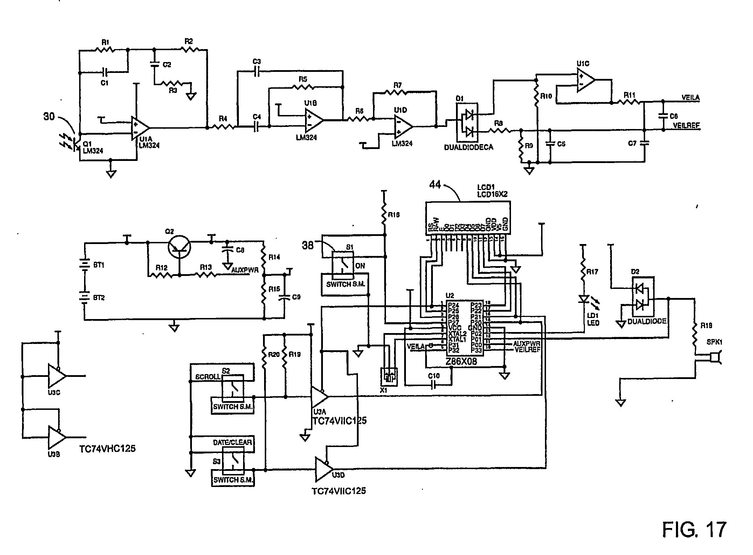

**FIG. 17** is another version of circuitry, which may be used to provide still other embodiments of hand-held device **12.** It includes a microprocessor **U2** that may of commercially available type Z86X08. It is similarly provided with 8 kHz and 16 kHz signals (more precisely 15.635 kHz and 7.8175 kHz) that respectively constitute the horizontal retrace signal and the data signal at half of that frequency, since the auxiliary data encoded on alternate horizontal lines and so is effectively present at only half the horizontal scan rate, as explained above. These signals are identified as **VEILA** and **VEIL REF** that are provided as inputs to microprocessor **U2.** Therefore, it will be understood that operational amplifier circuits consisting of operational amplifiers **U1A, U1B, U1C** and **U1D** provide the same functions of amplification, filtration, frequency shaping and discrimination, as well as buffer circuits described in **FIG. 16****.** The microprocessor, clocked by crystal **X1** at 8 MHz, decodes the data provided by the composite video signal, stores it in internal RAM or DRAM and drives an LCD **44** illustrated as circuit component **LCD1** which may be, as shown, a 16-character by 2-line display. It may instead be a 12-character by 3-line display, for example, or other format appropriate for the display message to be presented at the surface of the device.

Power for the circuit is provided by two cells **BT1** and **BT2** of 3 volt potential to a circuit including **Q2** to provide not only main power by auxiliary power, the later being delivered to microprocessor **U2** for maintaining its continued operation, such as for date and time keeping even when LCD **44** is not being operated and collectively referred to as battery **22.** A switch **S1** is provided for performing the function of power button **38** (as shown in **FIG. 8****)** in the several embodiments and, when pressed, enables power to be provided to the LCD1 and other switching functions may be provided by switches S2, which controls scrolling of the LCD **44,** and switch **S2** may be actuated by scroll button **40** shown in **FIG. 14****.** Similarly a switch S3 provides a date function that may be actuated by expiration button **42.** These signals control inputs to operational amplifiers **U3A** and **U3D,** respectively, and these are provided as inputs to the operational amplifier and also to LCD1. The clear switch will, when operated as described above clauses clearing of the date, and the scroll switch enables the user to cause the message across the LCD **44** as that in **FIG. 8****.** Operational amplifiers U3C and U3B provide voltages useful according to the connection illustrated.

The circuit embodiments shown are used in conjunction with a method for producing a composite video signal containing video program material and control data, and displaying the signal on a television and decoding such control data for ancillary use, wherein the method includes modulating at least one video field within the viewing area of display device **10** in such manner that the modulation is substantially invisible to the television viewer, thereby producing a video subcarrier component of the signal (which is as indicated detectable at an 8 kHz rate) containing the data; and detecting the component to reproduce the data for the ancillary use. Although luminance modulation is particularly useful for that purpose when using hand-held devices **12** in accordance with the invention, chrominance modulation may instead be employed as according to Broughton. Furthermore, the improvements in modulation described in Ciardullo may likewise be used and may be preferable depending on the particular embodiment. Various alternative modulation (and corresponding modulation) schemes may be employed as alternatives, including (but not limited to) amplitude shift keying (ASK), frequency shift keying (FSK) modified frequency shift keying (MFSK), and phase shift keying (PSK). And although the substantially 8 kHz data-carrying submodulation is at half the NTSC horizontal scan rate, other submodulation techniques may be used at other multiples or submultiples or other periodic rates which are other functions of the horizontal scan (retrace) rate.

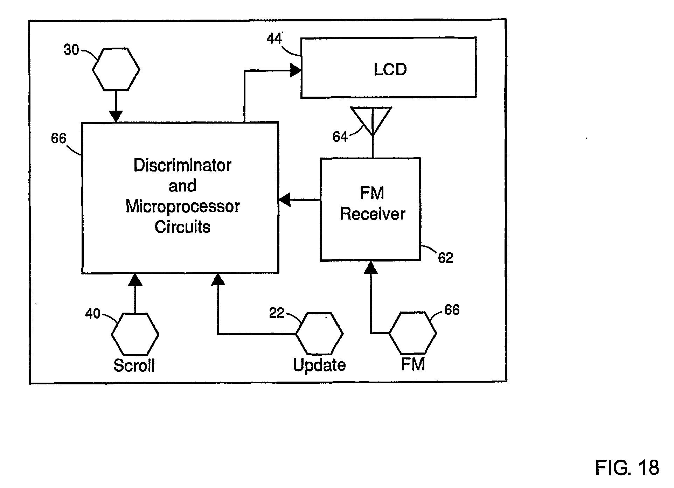

**FIG. 18** is a block diagram of circuitry of yet another possible embodiment of the interactive hand-held devices, designated **12,** which shows discriminator and microprocessor circuits **66** which are in accordance with **FIGS. 16** or **17****,** and receiving composite video signals by photosensor **30** so as to decode the auxiliary data and provide either light signals as described above, or, preferably, to drive LCD **44** according to the foregoing description. Thus, it includes an update or initiating button **23,** as according to the "sports" hand-held device **12** and upon actuation begins the process of optical detection. In addition, an FM receiver **62** and associated antenna **64** (collectively seen as RF antenna **68** in **FIG. 2****)** may be provided as a surface-mount module added to the printed circuit board **26** of device **12.** FM receiver **62** and associated antenna **64** may be of commercially available design, suitable for being powered by battery **22** or cells (not shown) provided in accordance with the foregoing description of various embodiments. Control button **66** may optionally initiate operation of FM receiver **62** so that it sends FM-demodulated signals to microprocessor circuits **60.** The FM receiver **62** be any type of RF antenna that is of the size and accordance with the invention, such that the discrimination may take place on a decoder **82,** and the results are sent to the hand-held device **12** via RF.

Hand-held device **12** may be utilized in sports environment as described in relation to **FIG. 15****,** but the addition of FM receiver **62** gives device **12** the capability of being used in sports stadiums and other performance venues where video signals are not readily available. Thus, hand-held device **12** may receive either optical signals or electrical signals. In the case of a hand-held device **12** according to **FIG. 15****,** the user may as described above receive statistics about a player depicted on device **12,** or about a player at bat. According to a preferred method of using hand-held device **12,** the same auxiliary information as would be transmitted via a television broadcast for being received on a display device **10,** there to be displayed as composite video signals, is in addition transmitted by low-power FM signals in the FM broadcast band of 88-108 MHz. For this purpose, FM receiver **62** may be pretuned to an appropriate frequency for such low-power signals. The FM signals may include batter statistics, for example, as batters come to bat, so that holders of the new devices **12** may update their devices as their preferred batters come to bat.

Hand-held devices **12** may have use in various sports events, entertainment presentation, conventions, museums, tours, and guided events at which holders of devices **12** might not conveniently use them while in the presence of a display device **10** carrying auxiliary data, but where the location in which the devices **12** will be used will permit low-power FM or other RF signals. Other commercially significant usage of the devices of **FIG. 18** can be made, similar to the methods of using the previously described versions. Similarly, hand-held devices **12** may be adapted to receive AM signals, or auxiliary light signals such as IR (infrared) light signals, different from the composite video signals.

Similarly, hand-held devices **12,** whether or not sized as "cards", PDAs, or cell phones or other conveniently hand-held size, and whether in the form of racing devices, may simulate other objects, vehicles, personalities, or devices for house-hold, personal or business use, so as to provide a verisimilitude or facsimile representation of such devices **12** or usage, so that hand-held device **12** suggests to the user the manner of its use, or conveys to the users special feeling, sense, identity or association with a field, activity, sport, entertainment or other use of the device **12** it represents. In games, for example, in which some or all of the information content useful in the game may be provided by auxiliary data, hand-held devices **12** configured to provide a verisimilitude or facsimile representation of such devices holder **12** or usage may give players of the game enhanced sense of play, participation or gaming identity. The foregoing is merely illustrative of the many possibilities.

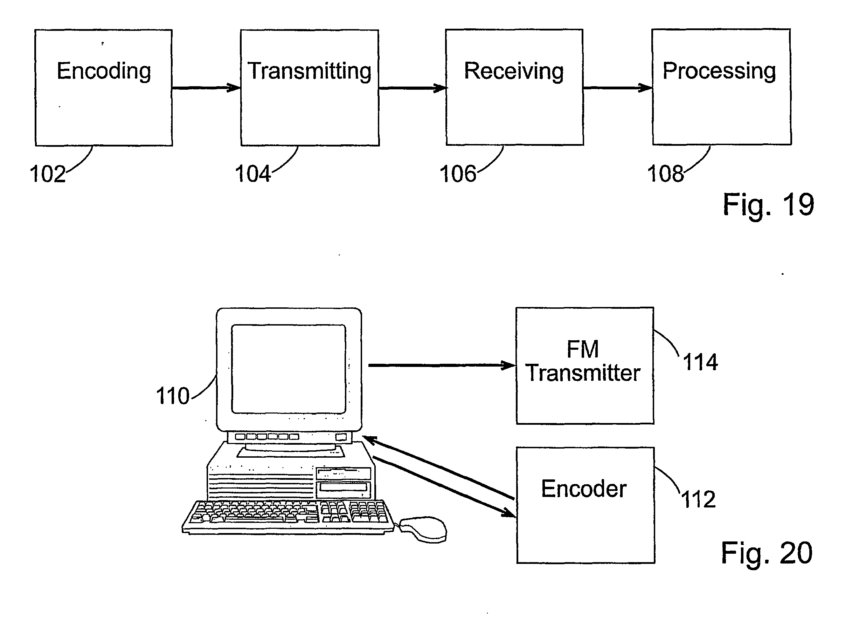

The present invention may also utilize a novel method of transmitting auxiliary data to hand-held devices **12** using the existing RBDS system. This method of the present invention is shown in **FIG. 19** and described herein. A first encoding step **102** comprises modulating a FM signal with data that will be transmitted within a subcarrier of the FM signal. Encoding step **102** preferably transpires at a radio station, but alternatively transpires at a location that records radio commercials.

Turning to **FIG. 20****,** encoding step **102** may be observed in more detail. In encoding step **102,** a sponsor enters a promotional opportunity (in the form of data) that it wishes to provide users into a computer **110.** Computer **110** processes its input and, using RBDS encoder **112,** encodes the information within a subcarrier of the FM signal. More specifically, the RBDS methodology used with the present invention impresses the information onto a 57 kHz subcarrier within a designated frequency (e.g., 94.7 mHz). Once the FM signal is modulated to contain a subcarrier with the promotional opportunity, the FM signal is ready to be transmitted by use of FM transmitter **114.**

The preferred method of transmitting information via FM transmitter **114** using RBDS is through the use of an existing FM radio station (that broadcasts on a known frequency) during a prerecorded commercial. In this way, encoding step **102** as shown in **FIG. 19** may be completed in advance of a commercial's airing, such that additional radio station personnel will be unnecessary at the time of commercial transmission. Alternatively, encoding step **102** may occur such that the FM signal is modulated in real time immediately before it is transmitted via transmitting step **104.** By either method, the encoded information is preferably synchronized to whatever audio is contained with the main carrier of the FM signal. It will be appreciated in the art that the methods of triggering the inclusion of the information may be used interchangeably depending on the manner in which a sponsor desires to provide the promotional opportunity.

Referring back to **FIG. 19****,** transmitting step **104** effectuates the transmission of the modulated FM signal after the completion of encoding step **102.** The FM signal may be transmitted as is common with non-modulated FM radio wave signals as will be appreciated in the art. The FM signal is transmitted via airwaves and may be received by hand-held devices **12,** as well as standard radios that are incapable of providing promotional opportunities described herein.

Appropriately tuned hand-held devices 12 during receiving step 106 may receive the FM signal as will further be described below. Once the FM signal is received by hand-held device **12,** a processing step **108** occurs in which the FM signal is processed and, when information containing a promotional opportunity is present within the FM signal, a user is presented with a promotional opportunity on device **12.**

When desirable, users may receive notification of the transmission of a promotional opportunity. In the preferred embodiment, users are alerted via the audio contained with the main carrier of the FM signal. Users listening to a radio may be instructed to "hold down your button now to receive an opportunity", or otherwise may be advised that they will soon receive or just have received a promotional opportunity on their hand-held device **12.** However, under the present invention it is not necessary for a user to listen to a radio to receive promotional opportunities. Hand-held device **12,** however, must be "listening" to a frequency to detect the subcarrier. Therefore, as an alternative, an alert may come directly from hand-held device **12.** The users may be alerted either audibly or visually, such as may include a "beeping" or other sound, the lighting of a LED **20,** shaking or other vibration of hand-held device **12,** or a text message displayed on LCD **44.**

The promotional opportunity may be processed by hand-held device **12** via various methods, depending on the money allocated to the manufacturing cost of device **12** and the application in which device **12** is to be used. In the preferred embodiment, the information received by hand-held device **12** contains all the text to be displayed to the user to provide the user with the promotional opportunity.

Alternatively, the information sent to the hand-held device **12** may be a trigger. Once a trigger has been received and processed by hand-held device **12,** the user may receive an audio or visual indication that an opportunity is forthcoming or that an opportunity has just been received by device **12.**

The information received by hand-held device **12** may contain means to differentiate and categorize the promotional opportunities through use of a classification code. The classification code corresponds to a category of a promotional opportunities, such categories may be found to include apparel, automotive, computers, contests, dining, electronics, entertainment, financial services, groceries, health and beauty, home and garden, Internet websites, children, pet products and travel. The aforementioned list is an example only, and other types of categorization schemes may be used depending on the applications in which hand-held device **12** are to be used.

A stored record contains a database with flags of the user's preferences. Users identify the categories in which they wish to receive promotional opportunities. The categories may be set upon issuance of hand-held device **12,** but is preferably programmed directly by the user either by connecting device **12** to a computer (via the methods of computer connection are described in Koplar) to download a configuration to device **12.** When a classification code is received by hand-held device **12,** device **12** makes a comparison of the classification code received against the stored record to determine whether device **12** should store the promotional opportunity and alert the user, ignore the promotional opportunity, or take another action as may be designated by the sponsor (or the user). The stored record may alternatively indicate that some promotional opportunities should be immediately stored and displayed to the user, while other categories of promotional opportunities should provide the user with the ability to view, store, and/or immediately discard the received promotional opportunities. It will be appreciated in the art that this concept of promotional opportunity categorization is novel to hand-held devices **12** and may be modified and expanded to encompass known techniques for "opt-in" mailing. Thereby, users of hand-held device **12** will not have to parse numerous promotional opportunities that they are not interested in to locate the opportunities that are of value to them. It will be also appreciated that the method of promotional opportunity categorization may function outside of hand-held device **12** and may work with other devices **12.**

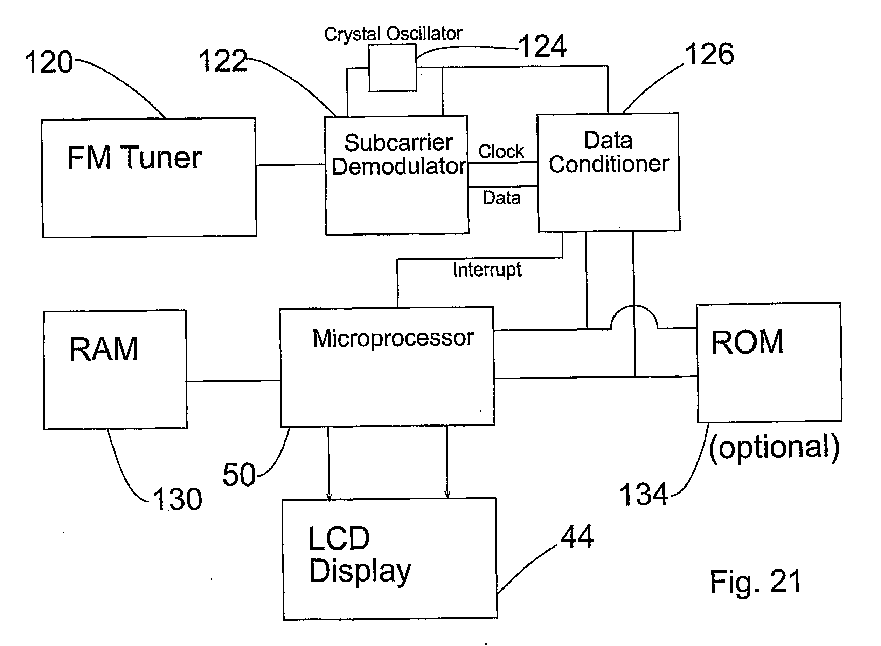

Turning now to **FIG. 21****,** the circuitry of the hand-held device may be observed. FM tuner **120** is used in receiving step **106** (as shown in **FIG. 19****)** to receive the FM signal on hand-held device **12.** FM tuner **120** also initiates processing step **108** (as shown in **FIG. 19****)** and preferably contains means to detect both the main carrier (which contains the audio) and the subcarrier (which contains the information). Without the detection means of the main carrier, it is impractical to make FM tuner **120** sensitive enough to identify the subcarrier.

FM tuner **120** receives the FM signal (e.g., double side band suppress carrier) containing the auxiliary data at the radio frequency specified on crystal oscillator **124.** Subcarrier demodulator **122** then processes the FM signal by converting the subcarrier signal, if present, into a data stream. Thereby, the information that was originally encoded in the studio is extracted into a raw form (i.e., the data stream). The data stream, as it exists after being created by the subcarrier demodulator **122,** is in such a raw form that it is virtually unusable. The data stream consists of a clock signal and data signal. The clock signal is synchronized to the clock of computer **110.**

The ways in which FM tuner **120** tunes to a specific frequency depends on the application. The preferred embodiment is permanently set upon crystal oscillator **124,** so that device **12** leaves the factory and remains at a constant frequency. Alternatively, FM tuner **120** may control crystal oscillator **124** such that it constantly scans radio frequencies until it locates a modulated FM signal. It then stops scanning, and determines whether the modulated FM signal is relative to the desired application. The third method is where FM tuner **120** is directly controlled by the main microprocessor **128.** Microprocessor **128,** with or without input from the user, may decide to scan every frequency or it may have a list of frequencies at which to look. It will be appreciated that hand-held device **12** may be configured to receive only those FM signals of a particular station, of a particular parent company, or within a particular market (e.g., St. Louis, Missouri).

The clock signal and data signal may be observed to travel from subcarrier demodulator **122** to data conditioner **126.** Data conditioner **126** is configured to be compatible with computer **110,** so that data conditioner **126** is capable of parsing out the transmitted information.

It will appreciated in the art that as the signal travels from FM tuner **120** to subcarrier demodulator **122,** the FM signal may be received by an amplifier (not shown) so that a user may hear the audio (i.e., voices and music) contained with the FM signal.

In the preferred method of the present invention, there is no start and stop pulse transmitted along with the information. This configuration differs from computer processing on a home computer, wherein the signals contain a start pulse, 8 bits of data, and a stop pulse. On a home computer, at the receiving end of the data the computer looks for a stop pulse. However, with the preferred method of the present invention, it is undesirable to allocate time and resources to look for the start and stop pulses. Data is sent continuously without start and stop pulses and instead an error correction code is sent and used. After two bytes of data are sent, the correction code is sent. During encoding step **102,** encoder 112 processed the FM signal and the algorithm was performed prior to its transmission. The computer uses its knowledge of the information to obtain the correction code. The correction code, when received by hand-held device **12** is processed by the reverse of the algorithm to determine the originally sent information. Data conditioner 126 therefore extracts the information from the data stream. Every time data conditioner **126** extracts a block of data, it comes up with a status and two data bytes. The status byte tells it which portion of the transmission it is receiving. The transmission consists of four bytes, the first of which is a status byte tells the data conditioner which block its is receiving, and the next two bytes are the actual data, and the fourth contains no data.

As soon as data conditioner **126** receives the first three blocks, it generates an interrupt pulse. The interrupt pulse alerts microprocessor **128** that data conditioner **26** has data and that microprocessor **50** should retrieve it. As will be understood in the art, an "interrupt" means that whatever a computer is doing prior to its receipt of the interrupt, it stops and handles the interrupt's request. When microprocessor **50** completes the task designated to it by the interrupt, it returns to its originally processing. Under the present invention, microprocessor **50** sees the interrupt and queries data conditioner **126** as to what data it has. The information transferred from data conditioner **128** to microprocessor **50** is preferably through the i-squared-c protocol, a Phillips proprietary protocol that is well known in the art.

When microprocessor **50** sees that the information is a promotional opportunity, it puts the opportunity into RAM **130.** There are four blocks of data sent every time. The first block is the PI code, which contains the station identifier or network ID. The second block describes what type of information is being sent in the group of four blocks. In the preferred embodiment, it will be group 2 radio text. It may alternatively be navigation information, raw data, or other type of data that could be usable within the system of the present invention.

The second block tells the specific location within the message of the next four bytes that will be received. Microprocessor **44** stores the location information within its own internal RAM (not shown) so that it has quick access to the information. After receiving the last two blocks, microprocessor **44** knows where in RAM **30** that it needs to put the blocks. Microprocessor **44** stores the data in RAM **30** for its future use.

One of the bits sent within the second block is an AB flag. Microprocessor **44** is working on two promotional opportunities simultaneously. The first promotional opportunity is the one presently being displayed; the second promotional opportunity is the one being received. When the second promotional opportunity is complete, and the sponsor decides to send a new promotional opportunity, the AB flag changes status. The flag's change alerts microprocessor **44** that the first promotional opportunity has been sent. Microprocessor **28** then pulls the promotional opportunity out of RAM **30** and displays it on LCD display **44.** While hand-held device **12** displays this promotional opportunity, the first promotional opportunity will continue to be received. The promotional opportunity will continue to be displayed received until the AB flag changes. Then hand-held device **12** displays the promotional opportunity from RAM **30,** and begins to receive another new one. As it displays the promotional opportunity, it clears RAM 30 to remove artifacts of left over characters. The main processor constantly looks for the flag. This process is effective when the promotional opportunities are received and not kept, such as baseball statistics during a radio baseball game broadcast. It will be appreciated that it may be desirable to retain and reuse opportunities, and the method described herein may be altered to provide such capability.

Electronically coupled to subcarrier modulator **122** and data conditioner **126** is crystal oscillator **124.** Crystal oscillator **124** is compatible with a crystal oscillator located with encoding computer **110.** Crystal oscillator **124** is a precise timing mechanism that synchronizes the data coming into hand-held device **12.**

ROM **134,** although optional, is used in the preferred method of the present invention. ROM **134** provides an efficient means for providing a way of distinguishing between various hand-held devices **12,** so that may be identifiable and, when desired, unique. By storing an ID in ROM **134,** hand-held device **12** is capable of providing many of the promotional opportunities described in Koplar and herein.

Under the present invention, microprocessor **128** inserts a space in place of each character that it moved to LCD display **44.** In applications of device **12** where it is desirable to retain promotional opportunities, the promotional opportunities are placed into a different place in RAM **130** while the user is reading them. Promotional opportunities are stacked until RAM **130** is filled to its capacity.

Microprocessor **50** can distinguish between the various promotional opportunities, by using time signal transmitted every minute. Microprocessor **50** may need to be equipped with a built in clock that synchs to the radio station once a minute. As the promotional opportunity is being displayed on LCD display **44** and is being saved into a higher place in RAM **130,** the promotional opportunity may be time stamped. Thereby, each message has its own unique identifier, which may be used a means of archiving the promotional opportunities.

The preferable means of providing users controls under the present invention is by means of a keypad (not shown) that connects to microprocessor **50.** The preferable method of configuring hand-held device **12** with a keypad is by inserting a check keypad command into the main loop of microprocessor **50,** such that if the keypad is pressed microprocessor will initiate a subroutine function to handle the user request. It will be appreciated that the keypad has functionality similar to the functionality described in Koplar and herein.

ROM **134** provides a means by which each hand-held device **12** may have a unique number. As information is sent, the code can be embedded within text. Use of a symbol at the beginning of a series of numbers when received by hand-held device **12** may cause the numbers not to be displayed but instead compared to the number contained with ROM **134.** When a user's unit matches the number received to the number contained within ROM **134,** hand-held device **12** can react in a special or unique way, to provide promotional opportunities as described in Koplar and herein.

There are complexities when encoding signals in real-time video displayed by monitors, such as with computer monitors. As described in Ciardullo and Broughton, the substantially invisible signal methods encode with one video display line brighter and one line dimmer throughout the entire monitor. Using a constant stream of encoded video content with computers requires low-level devices drivers that are difficult to coordinate with the computer operating system and the video card that it controls. Monitors, unlike traditional televisions where the video content is formatted prior to its reception, generate the video content at the operating system level, such as with Microsoft^{®} Windows ^{™}, by use of a video card. It is therefore difficult to control the display of a computer monitor unless the video data is generated from an application program that makes calls to the operating system to display requested data.

The present system utilizes computer software and hardware including the operating system, application program, video card, and monitor, as well as a hand-held device **12** to receive data by the user. Under the present system, the application program needs to be executed so that it will begin to transmit its data. The preferred method to imitate an application program is to trigger the start of the application program on specified user interactions with Microsoft^{®} Internet Explorer ^{™} or similar web browsing software. When users interact with their web browser by moving the mouse and clicking or double-clicking, the web browser can selectively execute the application program on specified events. The application program is stored as a dynamic link library (DLL), such that the web browser can call and initiate the DLL on events where the web browser determines that it needs the DLL file. Installation of the DLL plug-in prior to initiating the present invention may be required so that the web browser can call the application program. When a user attempts to provide interactions to hand-held device **12** for the first time by utilizing the web browser and the appropriate web site will perform an action that requires calling the application program. The user will then be prompted by the web browser for the user's permission to download and install the DLL. After installation of the DLL, the action that the web browser wanted to fulfill will execute and the desired results will occur. Persons skilled in the art of the present invention should appreciate alternate arrangements of the present invention, as the application program may be configured to be a stand-alone program or otherwise integrated within another application program.

The application program is initiated when the user performs various actions at points throughout the website being explored with the web browser. Upon initiation, the application runs and there is an image displayed on the monitor **10** so that the user can capture the data received from the image on hand-held device **12.** In the preferred embodiment of the present invention, the image will appear in the title bar of the maximized web browser. The image may, however, be located anywhere on monitor **10** that is visible. For example, the image may appear in the eyes of a pumpkin and people with hand-held device +**12** could thereby capture the opportunity or benefit on their device **12** in the form of a talking scarecrow doll that interacts with a ghost story. Furthermore, the image is not limited to a box shape; it may be virtually any shape capable of displaying a large enough image so that users at a specified distance from monitor **10** can capture data.

The stream of data received by photosensor **30** of hand-held device **12** is used to trigger actions on device **12** or to pass data directly to device **12** for its use. Data received by hand-held device **12** can be used in multiple different ways, including those mentioned herein and in Koplar.

In the preferred method of the present invention, the data received by hand-held device **12** acts as a trigger initiating action on the device **12.** Hand-held device **12,** upon receiving data, looks to see if the data it received matches one of its triggers. For example, if hand-held device **12** is in the form of a plush mouse, and the mouse receives a trigger that initiates a phrase such as "Hello boys and girls", then upon receipt of the trigger device **12** will repeat the specified phase. Triggering hand-held device **12** optimizes the amount of data that needs to be passed to it.

The present invention therefore describes a mechanism to receive data on hand-held device **12** from the computer or the Internet without wires. Under the preferred embodiment of the present invention, there is no feedback path from the hand-held device **12.** However, it will be appreciated that hand-held device **12** may be enhanced with means for feedback by including RF, IR, USB or other means described in herein and in Koplar. Hand-held device **12** may collect data and utilize opportunities received from data collection by any of the means described herein or in Koplar.

Under the present invention, a communication path is established to send data streaming from the monitor **10** to hand-held device 12. The data is sent by strings of ones and zeros from a varying visual image on monitor **10.** Ones are detected when the image emanates the frequency, and zeros are detected when the image emanates no frequency. Thus, under the preferred embodiment where the image is shown in the title bar of a web browser, a solid white color in the title bar indicates that no frequency is present and alternating white and black lines indicate that frequency is present. For each instance in time for which hand-held device **10** is active and optical sensor **30** faces monitor **10,** if it reads the alternating white and black lines a data bit of one is recorded, and if the lines have not be ready a data bit of zero is recorded. By varying the appearance and frequency of the display of the colors on the screen of monitor **10,** data can be transmitted to hand-held device **12.**

A complexity in transmitting the data to hand-held device **12** under the present invention is the differing computer, monitor, and video card configurations transmitting the data. Depending upon the configuration, the visual image on monitor **10** will vary to transmit the proper frequency to hand-held device **12.** Further, the bit per second transmission rate of monitor **10** will vary with the refresh rate. The present invention acts independently of the computer configuration as will be described in more detail below.

Monitor **10** typically has a CRT tube which draws a picture across the computer screen and continues down the length of it from top to bottom before beginning with the next reiteration. Monitor **10** emanates an image containing a frequency that the hand-held device **12** detects during each successive refresh (i.e., redrawing) of the screen. During each refresh, an image will display on the specified section of monitor **10** either indicating that a frequency was present or was not. Hand-held device **12** looks for that specific frequency and records a data bit based on its result. If the frequency displayed by the image is 18 kHz, hand-held device **12** on each refresh of monitor **10** will detect whether an 18 kHz image is present. If the 18 kHz image is present, the data bit present is a one; otherwise, the data bit present is a zero.

Under the present invention, hand-held device **12** receives a binary data stream and one bit per monitor **10** refresh. If monitor **10** refreshes at 60 Hz, there are 60 bits of data transmitted to hand-held device **12** in one second. At every monitor **10** refresh, hand-held device **12** will look to see if the frequency was present or not. If the frequency is present hand-held device **12** records a data bit of one, and if the frequency is not present device **12** records a data bit of zero. The binary data stream provides the data, which may be used as a trigger or stored.

An example of the foregoing is as follows: The application program wants to send a binary code of 1011 to hand-held device **12** at a frequency of 18 kHz. When monitor **10** draws one field (i.e., one picture on the screen), it puts the 18 kHz image on the screen of monitor **10.** Optical sensor **30** of hand-held device **12** reads monitor **10,** detects the 18 kHz image, and records a data bit of 1. On the next refresh, the application program wants to show a data bit zero and so it erases the image on the screen and puts up a white block (e.g., thereby not containing the 18 kHz image.) When hand-held device **12** looks again at monitor **10,** it does not detect the 18 kHz image and therefore records a data bit of 0. Hand-held device **12** thus so far has received data bits of 1 and 0. On the next refresh, monitor **10** displays the 18 kHz image and hand-held device **12** reads the image and records a data bit of 1. On the final refresh, monitor **10** leaves the 18 kHz image in place and hand-held device **12** again reads the image and records another data bit of 1. Thus, hand-held device **12** reads the code from the application.

The data signal is preferably sent multiple times to insure that hand-held device **12** was positioned appropriately and not too far outside interference impeded the transmission. Hand-held device **12** may be set to use each data it receives, or it may compare the results of the stream it received with the previous stream to ensure that the same data is not replicated within device **12.** An event manager on hand-held device **12** may make determinations as to what happens when data is received.

As briefly described above, the present invention acts independently of the computer configuration. The application program runs independently by varying the image based on the standard horizontal frequency. The horizontal frequency differs with every monitor **10** setup. The horizontal frequency is determined by 3 factors including the number of pixels on a line, the number of lines in a picture/screen, and the vertical refresh rate. Therefore, video cards configured of differing resolutions will have different horizontal frequencies. The differing horizontal frequencies impact the frequency at which the image on monitor **10** is displayed, and therefore the horizontal frequency is taken into account by the application program when displaying the image.

For example, if a computer video card is configure to run monitor **10** in 800 x 600 running at 60 Hz have and the desired image frequency is 18 kHz, the image will have one line set to white, the second is black, the third line white, and fourth line black, and so on. The result of that is an image frequency of 18 kHz. If the video card was configured to 1024 x 768, the first 1¼ lines white need to be white, the next 1¼ lines black and so on to get the 18 kHz frequency.

The application program makes the adjustment based on the horizontal frequency. Operating systems such as Microsoft^{®} Windows make the number of pixels per line and the number of lines per screen available. A statistical testing program measures the vertical refresh rate by recording the time it takes for screen drawing to occur. The application program then stores the configuration in the Windows registry. The registry is data stamped so that on a daily basis the application will re-run this configuration program. It will be appreciated in the art that then statistical data could however be stored in alternate locations, and that other variations of time stamp checking could occur.

Hand-held device **12** may be any of the configurations suggested in Koplar or herein, including smart cards, cell phones, PDAs, toys, and plush animals. The only limiting factor on the type of hand-held device **12** that may be used with this particular embodiment of device **12** is that it must have optical sensor **30** or other means of reading the image from display device **10,** and the technology within device **12** to interpret the data received as with the present invention. It should be understood in the art that the technology for processing the data as described below could be implement in hardware, software, or a combination of hardware and software.

Optical sensor **30** of hand-held device **12** acquires the light from the direction of monitor **10** and filters out the non-usable frequencies. Hand-held device **12** first processes the received data to determine what image was present. The band pass filter eliminates leftover signal noise and leaves any present image frequency. Thus, the signal leaving the band pass filter is either something or nothing. Rectifier **260** takes the absolute value of the signal and adds it to the integrator **270.** Integrator **270** accumulates each portion of the image signal received in each refresh to determine if the signal received was an image or noise. If there is sufficient signal to conclude that a signal was present, the microcontroller 280 reports a value of one; otherwise, a value of zero is reported.

Hand-held device **12** determines how frequently it must sample monitor **10.** The signal after its original filtration also proceeds to envelope detector **230,** which attempts to match the signal received to various monitor **10** refresh rates. The matching results are passed to the vertical sync reconstruction **240** to determine which of the standard refresh rates the monitor is using. The application program thus transmits sufficient information along with the data to hand-held device **12** so that hand-held device **12** can determine the horizontal frequency of monitor **10** and determine how many times per second it must look for an image and record data bits.

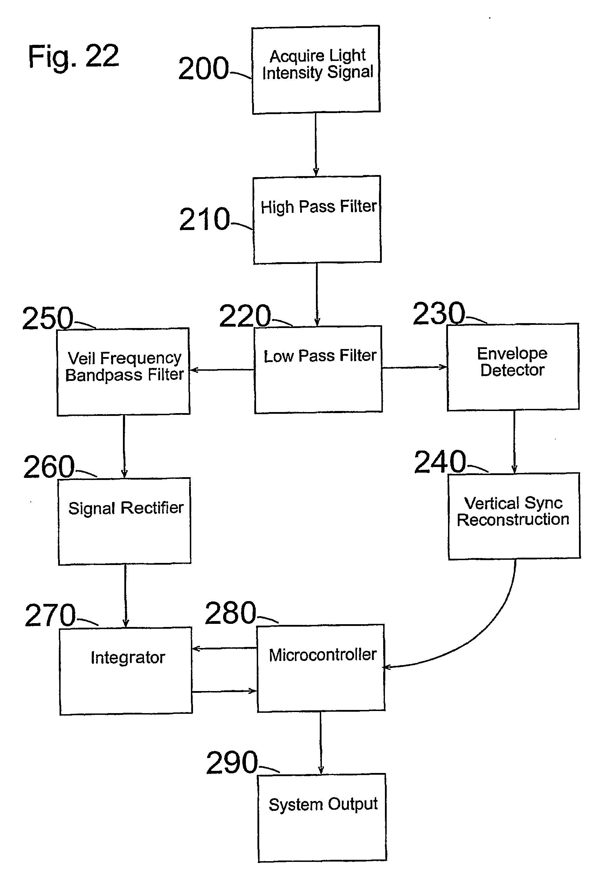

Referring to block diagram **FIG. 22****,** it may be observed that light is first acquired **200,** then processed through a high pass filter **210** and low pass filter **220** to detect the auxiliary data as described above. A first portion of the signal is then processed by envelope detector **230** and vertical sync reconstruction **240** to determine the configuration of the monitor, the results of which are passed to the microcontroller **280.** A second portion of the signal travels through the VEIL frequency band pass filter **250,** signal rectifier **260,** and integrator **270** pursuant to the repeated requests of microcontroller **280.** Microcontroller **280,** upon receiving data upon each segment request, provides system output **290.**

In view of the foregoing description of the present invention and practical embodiments it will be seen that the several objects of the invention are achieved and other advantages are attained. The embodiments and examples were chosen and described in order to best explain the principles of the invention and its practical application to thereby enable others skilled in the art to best utilize the invention in various embodiments and with various modifications as are suited to the particular use contemplated.

As various modifications could be made in the constructions and methods herein described and illustrated without departing from the scope of the invention, it is intended that all matter contained in the foregoing description or shown in the accompanying drawings shall be interpreted as illustrative rather than limiting.

The breadth and scope of the present invention should not be limited by any of the above-described exemplary embodiments, but should be defined only in accordance with claims of the application and their equivalents.

The present system and hand-held devices useful in the system may be for these purposes distributed by various business entities, which may include not only the sponsor of a program, event, or other sponsored transmission, but may also include various businesses, services and organizations having commercial relationships with the sponsor. Viewer's use of the new devices of the invention accordingly provide commercially advantageous results relating to television advertising, promotions and other sponsored transmissions, wherein new system and devices and their use is effective to:
- Attract viewer attention to advertising, promotions and other sponsored transmissions
- Effectively increase awareness and retention of message and product
- Induce viewers to respond and take action after viewing to sponsored transmissions
- Differentiate a sponsor's product or service from those of competitors.
- Stimulate viewers to desire to watch advertising, promotions and transmissions.
- Provide a novel, cost-effective, brand efficient, and enjoyable medium for enhancing advertising, promotions and other transmissions
- Cause advertising, promotions and transmissions to take on special event significance
- Build customer traffic in places of business or points of sale associated with sponsors of advertising, promotions and other transmissions
- Increase consumer loyalty to sponsors of advertising, promotions and transmissions
- Increase viewer involvement in sponsored advertising, promotions and transmissions
- Cause viewer retention of sponsor identity and advertising or promotional content
- Enhance sales volume resulting from the sponsorship of advertising, promotions and transmissions
- Provide lasting value to sponsored advertising, promotions and transmissions
- Provide enhanced viewer/spectator involvement in sporting and racing events
- Afford viewers of television programming an opportunity to interact meaningfully with programming content and with advertising, promotions and transmissions.
- Enhance viewer good-will relative to advertising, promotions and events.
- Cause development of still other opportunities for interactive use of the devices.

## Claims

1. A method for visually transmitting auxiliary data together with a primary visual image from a monitor (10) of a computer system to a hand-held device (12) which incorporates an optical detector (30), the method comprising:
• determining within the computer system a horizontal frequency of the monitor (10);
• adjusting a data bit frequency of a signal embodying the auxiliary data based on the horizontal frequency of the monitor (10);
• combining the signal embodying the auxiliary data with a signal carrying the primary visual image to be transmitted by the monitor;
• transmitting the combined signal from the monitor (10); and
• receiving the auxiliary data at the optical detector (30) of the hand-held device (12) by manipulation of the hand-held device (12) so that the optical detector (30) of the device is oriented towards the monitor (10).

2. A method according to claim 1, wherein the determination of the horizontal frequency of the monitor (10) uses the number of pixels on a line, the number of lines on a screen and a vertical refresh rate of the monitor (10).

3. A method according to either preceding claim, wherein the step of combining the signal embodying the auxiliary data with the signal carrying the primary visual image to be transmitted by the monitor (10) comprises
• adding to the signal carrying the primary visual image an additional data element to transmit a 'one' data bit; and
• adding to the signal carrying the primary visual image no additional data element or an alternative data element to transmit a 'zero' data bit.

4. A method according to claim 3, wherein the alternative additional data element added to the signal carrying the primary visual image is a solid white colour, and the additional data element added to the signal carrying the primary visual image is alternating black and white lines.

5. A method according to any preceding claim, wherein the primary visual image is the title bar of a web browser.

6. A method according to any of claims 1 to 4, wherein the primary visual image is a box shape.

7. A method according to any preceding claim, wherein the auxiliary data is in the form of a binary data stream.

8. A system for visually transmitting auxiliary data together with a primary visual image and for receiving that auxiliary data, comprising
• a monitor (10) of a computer system having a horizontal frequency;
• an application program within the computer system, the application program comprising
o means for determining the horizontal frequency of the monitor (10),
o means for adjusting the data bit frequency of a signal embodying the auxiliary data,
o means for combining the signal embodying the auxiliary data with a signal carrying the primary visual image and
o means for transmitting the combined signal, and
• a hand-held device (12) incorporating an optical detector (30), and
• means within the hand-held device (12) for receiving the auxiliary data at the optical detector (30) when the optical detector (12) is oriented towards the monitor (10), all according to the method of any preceding claim.

9. A system according to claim 8, further comprising a web browser, wherein the execution of the application program is triggered by the web browser.

10. A system according to claim 9, wherein the application program includes a dynamic link library (DLL) stored and available for execution by the web browser.

11. A system according to claim 9 or claim 10, wherein the auxiliary data appears on the monitor as a part of the title bar of the web browser.

12. A system according to any of claims 8 to 11, wherein the hand-held device (12) further comprises means for processing the auxiliary data received by the hand-held device to trigger one or more actions of the hand-held device.

13. A system according to claim 12, wherein the one or more actions on the hand-held device (12) comprise the provision of promotional opportunities to the user of the hand-held device (12) in response to reception and processing of the auxiliary data.

## Patentansprüche

1. Verfahren zur visuellen Übertragung von Zusatzdaten zusammen mit einem primären visuellen Bild von einem Monitor (10) eines Computersystems zu einer in der Hand zu haltenden Vorrichtung (12), die einen optischen Detektor (30) enthält, wobei das Verfahren umfasst:
• Bestimmen einer Horizontalfrequenz des Monitors (10) innerhalb des Computersystems;
• Einstellen einer Datenbitfrequenz eines Signals, das die Zusatzdaten enthält, die auf der Horizontalfrequenz des Monitors (10) basieren;
• Kombinieren des die Zusatzdaten enthaltenden Signals mit einem Signal, das das primäre visuelle Bild, das vom Monitor übertragen werden soll, trägt;
• Übertragen des kombinierten Signals vom Monitor (10); und
• Empfangen der Zusatzdaten beim optischen Detektor (30) der in der Hand zu haltenden Vorrichtung (12), indem die in der Hand zu haltenden Vorrichtung (12) so gehandhabt wird, dass der optische Detektor (30) der Vorrichtung zum Monitor (10) hin ausgerichtet ist.

2. Verfahren nach Anspruch 1, wobei für das Bestimmen der Horizontalfrequenz des Monitors (10) die Anzahl von Pixeln auf einer Zeile, die Anzahl von Zeilen auf einem Bildschirm und eine Bildwiederholfrequenz des Monitors (10) verwendet wird.

3. Verfahren nach beiden vorhergehenden Ansprüchen, wobei der Schritt des Kombinierens des die Zusatzdaten enthaltenden Signals mit dem Signal, das das primäre visuelle Bild, das vom Monitor (10) übertragen werden soll, trägt, umfasst
• Hinzufügen eines zusätzlichen Datenelements zum Signal, das das primäre visuelle Bild trägt, um ein "Eins"-Datenbit zu übertragen; und
• nicht Hinzufügen eines zusätzlichen Datenelements bzw. eines alternativen Datenelements zum Signal, das das primäre visuelle Bild trägt, um ein "Null"-Datenbit zu übertragen.

4. Verfahren nach Anspruch 3, wobei das alternative zusätzliche Datenelement, das dem Signal, das das primäre visuelle Bild trägt, hinzugefügt wird, eine durchgehend weiße Farbe ist, und das zusätzliche Datenelement, das dem Signal, das das primäre visuelle Bild trägt, hinzugefügt wird, abwechselnd weiße und schwarze Zellen aufweist.

5. Verfahren nach einem der vorhergehenden Ansprüche, wobei das primäre visuelle Bild die Titelleiste eines Web-Browsers ist.

6. Verfahren nach einem der Ansprüche 1 bis 4, wobei das primäre visuelle Bild kastenförmig ist.

7. Verfahren nach einem der vorhergehenden Ansprüche, wobei die Zusatzdaten die Form eines Binärdatenstroms aufweisen.

8. System zur visuellen Übertragung von Zusatzdaten zusammen mit einem primären visuellen Bild und zum Empfangen dieser Zusatzdaten, wobei das System umfasst:
• einen Monitor (10) eines Computersystems, der eine Horizontalfrequenz aufweist;
• ein Anwendungsprogramm innerhalb des Computersystems, wobei das Anwendungsprogramm umfasst:
- Einrichtungen zum Bestimmen der Horizontalfrequenz des Monitors (10),
- Einrichtungen zum Einstellen der Datenbitfrequenz eines Signals, das die Zusatzdaten enthält,
- Einrichtungen zum Kombinieren des die Zusatzdaten enthaltenden Signals mit einem Signal, das das primäre visuelle Bild trägt, und
- Einrichtungen zum Übertragen des kombinierten Signals, und
- eine in der Hand zu haltende Vorrichtung (12), die einen optischen Detektor (30) enthält; und
- Einrichtungen innerhalb der in der Hand zu haltenden Vorrichtung (12) zum Empfangen der Zusatzdaten beim optischen Detektor (30), wenn der optische Detektor (30) zum Monitor (10) hin ausgerichtet ist, alle gemäß dem Verfahren nach einem der vorhergehenden Ansprüche.

9. System nach Anspruch 8, das ferner einen web-Browser umfasst, wobei die Ausführung des Anwendungsprogramms durch den Web-Browser ausgelöst wird.

10. System nach Anspruch 9, wobei das Anwendungsprogramm eine Dynamic Link Library (DLL) enthält, die gespeichert und verfügbar für die Ausführung durch den Web-Browser ist.

11. System nach Anspruch 9 oder Anspruch 10, wobei die Zusatzdaten auf dem Monitor als Teil der Titelleiste des Web-Browsers erscheinen.

12. System nach einem der Ansprüche 8 bis 11, wobei die in der Hand zu haltende Vorrichtung (12) ferner Einrichtungen zum Bearbeiten der von der in der Hand zu haltenden Vorrichtung empfangenen Zusatzdaten umfasst, um eine oder mehrere Aktionen der in der Hand zu haltenden Vorrichtung auszulösen.

13. System nach Anspruch 12, wobei die eine oder mehreren Aktionen der in der Hand zu haltenden Vorrichtung (12) das Bereitstellen von Werbungsmöglichkeiten an den Benutzer der in der Hand zu haltenden Vorrichtung (12) als Reaktion auf Empfang und Verarbeitung der Zusatzdaten umfasst.

## Revendications

1. Procédé pour la transmission visuelle de données auxiliaires conjointement avec une image visuelle primaire d'un moniteur (10) d'un système d'ordinateur à un dispositif portatif (12) qui incorpore un détecteur optique (30), le procédé comprenant:
déterminer, dans le système d'ordinateur, une fréquence horizontale du moniteur (10);
ajuster une fréquence de bits de données d'un signal intégrant les données auxiliaires sur la base de la fréquence horizontale du moniteur (10);
combiner le signal intégrant les données auxiliaires à un signal portant l'image visuelle primaire devant être transmise par le moniteur;
transmettre le signal combiné depuis le moniteur (10); et
recevoir les données auxiliaires au détecteur optique (30) du dispositif portatif (12) par le biais de la manipulation du dispositif portatif (12) de sorte que le détecteur optique (30) du dispositif soit orienté vers le moniteur (10).

2. Procédé selon la revendication 1, dans lequel la détermination de la fréquence horizontale du moniteur (10) utilise le nombre de pixels sur une ligne, le nombre de lignes sur un écran et un taux de rafraichissement vertical du moniteur (10).

3. Procédé selon l'une quelconque des revendications précédentes, dans lequel l'étape de combinaison du signal intégrant les données auxiliaires au signal portant l'image visuelle primaire devant être transmise par le moniteur (10) comprend
ajouter au signal portant l'image visuelle primaire un élément de données additionnelles afin de transmettre un bit de donnés de "1"; et
n'ajouter au signal portant l'image visuelle primaire aucun élément de données additionnelles ou un élément de données alternatives afin de transmettre un bit de donnés de "zéro".

4. Procédé selon la revendication 3, dans lequel l'élément de données alternatives ajouté au signal portant l'image visuelle primaire est une couleur blanche pleine, et l'élément de données additionnelles ajouté au signal portant visuelle primaire consiste en des lignes blanches et noires alternées.

5. Procédé selon l'une quelconque des revendications précédentes, dans lequel l'image visuelle primaire est la barre de titre d'un navigateur web.

6. Procédé selon l'une quelconque des revendications 1 à 4, dans lequel l'image visuelle primaire est une forme de boîte.

7. Procédé selon l'une quelconque des revendications précédentes, dans lequel les données auxiliaires sont sous forme de flux de données binaires.

8. Système pour la transmission visuelle de données auxiliaires conjointement avec une image visuelle primaire et pour la réception de ces données auxiliaires, comprenant
un moniteur (10) d'un système d'ordinateur ayant une fréquence horizontale;
un programme applicatif dans le système d'ordinateur, le programme applicatif comprenant:
un moyen pour déterminer la fréquence horizontale du moniteur (10),
un moyen pour ajuster la fréquence de bits de données d'un signal intégrant les données auxiliaires,
un moyen pour combiner le signal intégrant les données auxiliaires à un signal portant l'image visuelle primaire et
un moyen pour transmettre le signal combiné, et
un dispositif portatif (12) incorporant un détecteur optique (30), et
un moyen dans le dispositif portatif (12) destiné à recevoir les données auxiliaires au détecteur optique (30) lorsque le détecteur optique (30) est orienté vers le moniteur (10), le tout selon le procédé de l'une quelconque des revendications précédentes.

9. Système selon la revendication 8, comprenant en outre un navigateur web, où l'exécution du programme applicatif est déclenchée par le navigateur web.

10. Système selon la revendication 9, dans lequel le programme applicatif inclut une bibliothèque de liens dynamiques (DLL) stockée et disponible pour l'exécution par le navigateur web.

11. Système selon la revendication 9 ou la revendication 10, dans lequel les données auxiliaires apparaissent sur le moniteur en tant qu'une partie de la barre de titre du navigateur web.

12. Système selon l'une quelconque des revendications 8 à 11, dans lequel le dispositif portatif (12) comprend en plus un moyen pour traiter les données auxiliaires reçues par le dispositif portatif afin de déclencher une ou plusieurs actions du dispositif portatif.

13. Système selon la revendication 12, dans lequel la ou les plusieurs actions sur le dispositif portatif (12) comprennent la fourniture d'opportunités promotionnelles à l'utilisateur du dispositif portatif (12) en réponse à la réception et au traitement des données auxiliaires.
